(19) Europäisches Patentamt
European Patent Office
Office européen des brevets

(11) EP 2 026 088 A2

(12) # EUROPÄISCHE PATENTANMELDUNG

(43) Veröffentlichungstag:
**18.02.2009 Patentblatt 2009/08**

(51) Int Cl.:
***G01S 5/00*** *(2006.01)*

(21) Anmeldenummer: **08014243.3**

(22) Anmeldetag: **08.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **16.08.2007 DE 102007038697**

(71) Anmelder: **Björn Steiger Stiftung Service GmbH**
**70174 Stuttgart (DE)**

(72) Erfinder:
- **Jung, Peter**
  **47051 Duisburg (DE)**
- **Waadt, Andreas**
  **47057 Duisburg (DE)**
- **Bruck, Guido H.**
  **46562 Voerde (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(54) **Vorrichtung zum Schätzen einer Aufenthaltsposition eines Mobilfunkendgerätes**

(57) Eine Vorrichtung (100) zum Schätzen einer Aufenthaltsposition eines Mobilfunkendgerätes mit einer Einrichtung (110) zum Liefern von wenigstens zwei Schätzpositionen zu wenigstens zwei verschiedenen Zeitpunkten. Die Vorrichtung (100) umfasst ferner eine Einrichtung (120) zum Bestimmen von Geschwindigkeiten zwischen Schätzpositionen unter Berücksichtigung einer Geschwindigkeitsverteilung. Ferner umfasst die Vorrichtung (100) eine Einrichtung (140) zum Berechnen der Aufenthaltsposition unter Verwendung der wenigstens zwei Schätzpositionen, wenigstens einer Geschwindigkeit, der Gewichtungsfaktoren und den wenigstens zwei verschiedenen Zeitpunkten.

FIG 1A

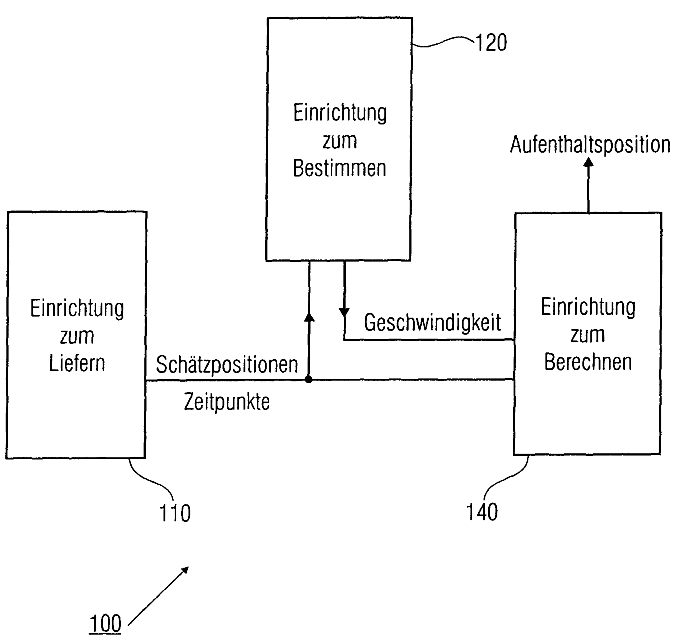


EP 2 026 088 A2

## Beschreibung

Die vorliegende Erfindung bezieht sich auf die Lokalisierung von Mobilfunktelefonen bzw. Mobilfunkendgeräten in Mobilfunknetzwerken.

Die Lokalisierung von Mobilfunktelefonen, insbesondere wenn diese nicht über einen eingebauten GPS-Empfänger (GPS = Global Positioning System, Globales Positionsbestimmungssystem) verfügen bzw. keine GPS-Abdekkung vorhanden ist, erfolgt in der konventionellen Technik durch Auswertung der Informationen, die durch die Verbindung der Mobilfunktelefone mit dem Mobilfunknetz und dessen Netzinfrastruktur gewonnen werden können. Im Bereich der konventionellen Technik kann die Lokalisierung durch Auswertung einer Position eines Sendemastes einer Funkzelle vorgenommen werden, in die ein Mobilfunktelefon eingebucht ist. Manche Funkzellen sind durch sektorisierte Antennen gekennzeichnet, wobei in diesen Fällen ein virtuelles Zentrum eines Sektors als Position des Mobilfunktelefons angegeben werden kann, in dem das Mobilfunktelefon eingebucht ist.

Diese Vorgehensweise erlaubt eine Positionsbestimmung eines Mobilfunktelefons, bzw. eines Mobilfunkendgerätes, nur mit einer eingeschränkten Genauigkeit. Dies ist insbesondere nachteilig in Situationen, in denen Notfälle auftreten und ein zeitnahes Eintreffen von Rettungskräften unabdinglich ist.

Im Bereich der konventionellen Technik existieren Verfahren, die eine höhere Genauigkeit zum Ziel haben und die neben der Position des Sendemastes der Funkzelle, in die das Mobilfunktelefon eingebucht ist, weitere Informationen auswerten können. Beispielsweise gehören zu diesen weiteren Informationen der Wert eines Timing Advance, ein zeitlicher Versatz zur Synchronisation in GSM-Netzen (GSM = Global System for Mobile Communication, Globales Mobilfunksystem) und in TDD-UMTS-Netzen (TDD = Time Division Duplex, Zeitbereichsduplex, UMTS = Universal Mobile Telecommunication System, universelles Mobilfunktelekommunikationssystem). Dieser Wert kann in den genannten Netzen zum Erreichen einer zeitlichen Synchronisation verwendet werden.

In anderen Konzepten ist eine genaue Messung einer Laufzeit der Funksignale zwischen einem Basisstations-Sende-Empfänger und einer Mobilstation vorgesehen, beispielsweise kann dies in FDD-UMTS-Netzen (FDD = Frequency Division Duplex, Frequenzbereichsduplex) vorkommen. Ferner können in GSM-Netzen und UMTS-Netzen die eindeutigen Bezeichnungen und die gemessenen Empfangsleistungen von bis zu sechs benachbarten Basisstations-Sende-Empfängern gemessen werden, über welche das Mobilfunktelefon bzw. Mobilfunkendgerät nicht eingebucht ist, deren Empfangsleistung aber standardmäßig gemessen und im Mobiltelefon gespeichert wird.

Ferner gibt es im Bereich der konventionellen Technik Verfahren, die Informationen über andere oder fremde Netze, die die Mobilstation empfangen kann und die daher in der Mobilstation vorliegen, berücksichtigen, wie beispielsweise über die Netze anderer Netzbetreiber, über UMTS-Netze oder über andere empfangbare Funksignale wie z.B. WLAN-Sendeempfänger (WLAN = Wireless Local Area Network, Lokales Schnurlosnetzwerk). Ferner kann eine zeitliche Aufzeichnung der oben genannten Werte und der Basisstations-Sende-Empfänger, in denen das Mobiltelefon eingebucht war, bei der Ermittlung einer Position hilfreich sein. Mit diesen Werten kann die "Spur der Bewegungen eines Mobiltelefons in der Netzwerkinfrastruktur" aufgezeichnet werden, und Aufschlüsse über einen momentanen Aufenthaltsort bzw. die momentane Position geben.

Fig. 6 illustriert ein System zur Alarmierung von Rettungsdiensten mit Nutzung einer Lokalisierung von Mobilfunktelefonen und Übermittlung von Informationen zur Positionsbestimmung durch ein externes Informationszentrum. Fig. 6 zeigt ein Mobiltelefon oder eine Mobilstation 610, ein Mobilfunknetz 620, welches in diesem Beispiel als GSM-Netzwerk ausgeführt ist, ein drahtgebundenes Netz 630, welches in dem Fig. 6 gezeigten Beispiel als POTS-/ISDN-Netzwerk (POTS = Plain Old Telephone Service bzw. Post Office Telephone Service, konventionelles Telefonnetz, ISDN = Integrated Services Digital Network, modernes drahtgebundenes digitales Telefonnetz), eine Rettungsleitstelle 640, an die der Notruf vermittelt werden soll, einen PLM-Netzwerkoperator 650 (PLM = Public Land Mobile, öffentliches Mobilfunknetz) und ein Informationszentrum 660, welches optional mit einem Modem 670 verbunden sein kann.

Fig. 6 zeigt ein System zur Lokalisierung einer Mobilstation 610 an einem Beispiel einer Alarmierung von Rettungsdiensten im Falle eines Notrufs. Ausgehend von einem Mobiltelefon 610 (MS = Mobilstation) wird ein Notruf ausgesandt, der über das drahtlose Mobilfunknetz 620 (PLM-Netzwerk) und das drahtgebundene Netz 630 (POTS-/ISDN-Netzwerk) an eine Rettungsleitstelle 640 weitervermittelt wird. Durch die Nutzung von beispielsweise "Location based Services" (LBS = Location based Services, Ortsbasierende Dienste) des Netzwerkbetreibers 650 (PLM-Netzwerk-Operator) wird eine Lokalisierungsinformation, z.B. die Lokalisierungsinformation des LBS, automatisch oder auf Anfrage an ein IT-Zentrum 660 weitergegeben, das durch geeignete Software der Rettungsleitstelle 640 eine berechnete Position des Mobilfunktelefons 610 beispielsweise mittels einer Karte anzeigt, damit die Rettungskräfte an die richtige Stelle geleitet werden können.

Das Informationszentrum (IT-Zentrum) kann dabei eine Datenbank mit Information über die Netzwerkinfrastruktur aufweisen. Die Weitergabe der Lokalisierungsinformationen kann dabei auch über eine andere Datenübertragungstechnik, wie z.B. per Fax oder E-Mail usw. erfolgen, wobei das IT-Zentrum 660 dann über ein entsprechendes Modem 670 verfügen kann.

Nachteilig an den bisherigen Lösungen ist ihre Genauigkeit, welche zwar stetig verbessert wurde, jedoch nach

wie vor eingeschränkt ist und weit unterhalb der Genauigkeit liegt, welche beispielsweise durch die Verwendung von GPS (GPS = Global Positioning System, Globales Positionsbestimmungssystem) erzielt werden kann. Hauptursachen für die eingeschränkte Genauigkeit sind Schätzfehler aufgrund von Abschattungseffekten und Mehrwegeausbreitung im Mobilfunkkanal, bzw. die Ungenauigkeit von Messwerten, welche der Positionsschätzung zugrunde liegen. Beispielsweise sind die Werte für den Timing Advance oder die Empfangsleistungen, die standardgemäß gemessen und im Mobilfunktelefon gespeichert sind, grob quantisierte Werte.

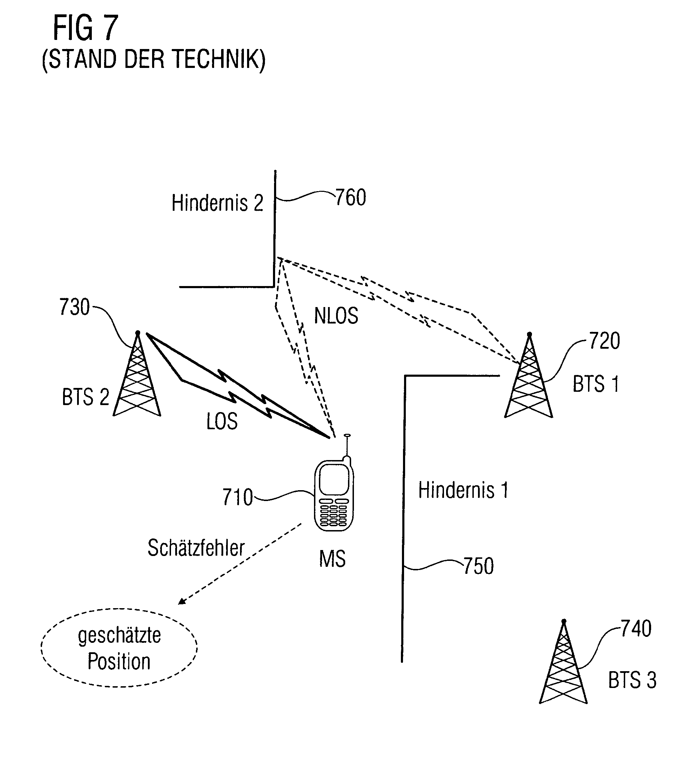

Zur Verdeutlichung dieser Problematik zeigt die Fig. 7 ein Beispiel einer Positionsbestimmung einer Mobilstation 710, die auch mit MS (MS = Mobilstation) bezeichnet ist. Die Fig. 7 zeigt ferner einen Basisstations-Sende-Empfänger 720, der auch mit BTS 1 (BTS = Basisstations-Transceiver, Basisstations-Sende-Empfänger) bezeichnet ist, einen Basisstations-Sende-Empfänger 730, der auch mit BTS 2 bezeichnet ist und einen Basisstations-Sende-Empfänger 740, der auch mit BTS 3 bezeichnet ist. Ferner zeigt die Fig. 7 ein Hindernis 750, das auch mit "Hindernis 1" bezeichnet ist und ein zweites Hindernis 760, welches auch mit "Hindernis 2" bezeichnet ist.

Bei der Positionsschätzung auftretende Schwierigkeiten werden durch die schematische Darstellung in Fig. 7 verdeutlicht. Ein Mobiltelefon (710,MS) empfängt Funksignale von den verschiedenen Basisstationen (720,BTS1; 730,BTS2; 740,BTS4). Die Basisstationen in der Umgebung des Mobiltelefons MS sind durch die Funkmaste BTS 1, BTS 2 und BTS 3 dargestellt. In dem in Fig. 7 dargestellten Beispiel besteht zwischen dem Mobiltelefon MS und BTS 2 eine direkte Sichtverbindung (LOS = Line Of Sight, direkte Sichtlinie), wohingegen zwischen der Mobilstation MS und BTS 1 eine Funkverbindung ohne direkte Sichtverbindung (NLOS = None Line Of Sight, keine direkte Sichtverbindung) besteht. Das Mobiltelefon MS ist durch das Hindernis 1 750 von BTS 1 abgeschattet. Das Funksignal von BTS 1 erreicht MS über eine Reflexion an Hindernis 2 760 auf indirektem Wege. Bekannte Positionsschätzverfahren messen Laufzeit und/oder die Empfangsleistung von Signalen, die zwischen Mobiltelefon und Basisstationen ausgetauscht werden. Mit Hilfe dieser Messwerte kann zunächst die Distanz zwischen Basisstation und Mobiltelefon geschätzt und schließlich die Position des Mobiltelefons bestimmt werden. Für ein eindeutiges Ergebnis eines solchen Verfahrens werden im Allgemeinen Funkverbindungen zwischen dem Mobiltelefon zu mindestens drei verschiedenen Basisstationen benötigt. In dem dargestellten Beispiel sei daher angenommen, dass neben den beiden erwähnten Funkverbindungen eine dritte Funkverbindung zwischen dem Mobiltelefon MS und der Basisstation BTS 3 bestehe, die jedoch der Übersichtlichkeit halber nicht dargestellt ist.

Obwohl sich das Mobiltelefon MS in Fig. 7 näher an der Basisstation BTS 1 befindet als an BTS 2, wird durch die indirekte Funkverbindung NLOS eine größere Signallaufzeit zwischen MS und BTS 1 gemessen, als zwischen MS und BTS 2. Des Weiteren wird auch die Funkfelddämpfung, des am Mobiltelefon MS gemessenen und von BTS 1 ausgesendeten Signals, größer sein, als die Funkfelddämpfung des Signals, welches von BTS 2 ausgesendet und am Mobiltelefon MS gemessen wird. Die daraus resultierende Fehleinschätzung der Distanzverhältnisse, führt zu einer geschätzten Position, die mit einem großen Schätzfehler behaftet ist.

Im Folgenden werden Vektoren als fettgedruckte Kleinbuchstaben gekennzeichnet. Mit der Abszisse x und der Ordinate y, kann die tatsächliche Position **p** eines Mobiltelefons in einem kartesischen Koordinatensystem durch den Vektor

$$\mathbf{p} = \begin{pmatrix} x \\ y \end{pmatrix} \quad (1)$$

dargestellt werden. Die geschätzte Position ***r*** lässt mit der Abszisse $\hat{x}$ für den Schätzwert von *x* aus (1) und der Ordinate $\hat{y}$ für den Schätzwert von *y* aus (1) durch den Vektor

$$\mathbf{r} = \begin{pmatrix} \hat{x} \\ \hat{y} \end{pmatrix} = \mathbf{p} + \mathbf{b} + \mathbf{n} \quad (2)$$

als die Summe der tatsächlichen Position ***p*** und eines Schätzfehlers ***b+n*** beschreiben. Der Schätzfehler setzt sich aus den Anteilen

$$\boldsymbol{b} = \begin{pmatrix} b_x \\ b_y \end{pmatrix} \quad (3)$$

und

$$\boldsymbol{n} = \begin{pmatrix} n_x \\ n_y \end{pmatrix} \quad (4)$$

zusammen. $\boldsymbol{b}$ wird als NLOS-Fehler bezeichnet und resultiert aus den Effekten der Abschattung und der Mehrwegeausbreitung. n ist der Fehleranteil, welcher aus einem Messrauschen resultiert. Seine Komponenten $n_x$ und $n_y$ werden als voneinander statistisch unabhängig und Gauß-verteilt angenommen. Der Fehlervektors **b** hängt von der Lage des Mobiltelefons und der Anordnung der abschattenden und reflektierenden Hindernisse ab.

Es gibt Versuche, statistische Eigenschaften des Fehlers **b** auszunutzen, um die Positionsschätzung zu verbessern. Ein Ansatz sieht z.B. vor, zunächst die fehlerbehaftete Abstandsschätzung des Mobiltelefons MS zu den Basisstationen zu verbessern und diese verbesserten Abstandsschätzungen für eine Positionsbestimmung mit kleinerem Fehler zu verwenden.

Beispielsweise sei

$$\boldsymbol{s}_i = \begin{pmatrix} s_{x,i} \\ s_{y,i} \end{pmatrix} \quad (5)$$

der Ortsvektor eines *i*-ten Basisstations-Sende-Empfängers BTS *i*. Dann ergibt sich der tatsächliche Abstand zwischen diesem Basisstations-Sende-Empfänger und dem Mobiltelefon MS zu

$$d_i = \sqrt{\left(x - s_{x,i}\right)^2 + \left(y - s_{y,i}\right)^2}\,. \quad (6)$$

Es sei angemerkt, dass gemäß (1) von einem kartesischen Koordinatensystem ausgegangen wird. Der Schätzwert von $d_i$ ist

$$\hat{d}_i = \sqrt{\left(\hat{x} - s_{x,i}\right)^2 + \left(\hat{y} - s_{y,i}\right)^2} = d_i + e_i + n_i\,. \quad (7)$$

Er ist die Summe aus dem tatsächlichen Wert $d_i$ und dem Schätzfehler $e_i+n_i$. $n_i$ ist ein Messrauschen, welches als Gauß-verteilt und mittelwertfrei angenommen wird. $e_i$ ist der zusätzliche NLOS-Fehler, welcher die Folge von Funkpfaden ohne direkte Sichtverbindung ist. $e_i$ ist eine im Allgemeinen mittelwertbehaftete Zufallsvariable und wird bisweilen als exponentiell, Rayleigh- oder Gauß-verteilt modelliert. Weil der NLOS-Fehler $e_i$ oft mehrere hundert Meter beträgt, hängt der gesamte Schätzfehler bei der Positionsbestimmung erheblich von $e_i$ ab. Für eine Minimierung des Schätzfehlers wird daher auch der NLOS-Fehler $e_i$ in die Schätzung einbezogen. Mit dem Schätzwert $\hat{e}_i$ des NLOS-Fehlers $e_i$ ergibt sich dann ein verbesserter Schätzwert $\hat{d}'_i$ der Distanz $d_i$, die zwischen dem Mobiltelefon MS und der Basisstation BTS i liegt, zu

$$\hat{d}_i' = \hat{d}_i - \hat{e}_i = d_i + n_i + \left(e_i - \hat{e}_i\right). \qquad (8)$$

Dadurch ließe sich der Schätzfehler verringern. Leider steigt durch diese Vorgehensweise die Anzahl der Unbekannten um die Anzahl der Basisstationen an. Eine sinnvolle Schätzung aller NLOS-Fehler $e_i$ ist daher nicht praktikabel.

Eine Lösung dieses Problems ist es, alle Schätzwerte $\hat{e}_i$ der NLOS-Fehler $e_i$ gleich $\hat{e}$ zu setzen:

$$\hat{e}_i = \hat{e}, \quad \forall i \qquad (9)$$

Wie anhand von Fig. 7 deutlich wurde, hängt der NLOS-Fehler $e_i$ jedoch erheblich von der Lage des Mobiltelefons MS und der betrachteten Basisstation BTS $i$ ab. Darum führt die oben beschriebene Schätzung von $\hat{e}$ nur zu geringfügigen Verbesserungen des Verfahrens zur Positionsbestimmung von Mobiltelefonen.

Neben dem beschriebenen Verfahren gibt es auch andere Verfahren zur Positionsschätzung, die auf der Auswertung von Informationen basieren, welche durch die Verbindung von Mobiltelefonen mit der Netzwerkinfrastruktur gewonnen werden können. All diesen Verfahren ist gemein, dass ihre Genauigkeit durch Effekte von Abschattung und Mehrwegeausbreitung beeinträchtigt wird. Die daraus resultierende Ungenauigkeit, kann zum Beispiel im Falle einer Positionsschätzung nach einem Notruf zu einer Verzögerung beim Einsatz der Rettungskräfte führen.

Es ist die Aufgabe der vorliegenden Erfindung, ein verbessertes Konzept zur genaueren Positionsbestimmung eines Mobilfunkendgerätes zu schaffen.

Diese Aufgabe wird gelöst durch eine Vorrichtung gemäß Anspruch 1 und ein Verfahren gemäß Anspruch 23.

Die vorliegende Erfindung schafft eine Vorrichtung zum Schätzen einer Aufenthaltsposition eines Mobilfunkendgerätes mit einer Einrichtung zum Liefern von wenigstens zwei Schätzpositionen zu wenigstens zwei verschiedenen Zeitpunkten und einer Einrichtung zum Bestimmen von Geschwindigkeiten zwischen Schätzpositionen unter Berücksichtigung einer Geschwindigkeitsverteilung. Die Vorrichtung umfasst ferner eine Einrichtung zum Berechnen der Aufenthaltsposition unter Verwendung der wenigstens zwei Schätzpositionen, wenigstens einer Geschwindigkeit, und den wenigstens zwei verschiedenen Zeitpunkten.

Der Kerngedanke der vorliegenden Erfindung besteht in der Berücksichtigung von Vorwissen bei der Positionsbestimmung von Mobilfunkendgeräten, wobei auch statistische Eigenschaften, die sich beispielsweise auf die Geschwindigkeitsverteilung der Mobilfunkendgeräte innerhalb eines Mobilfunknetzes beziehen können, in Betracht gezogen werden können. Dabei können mehrere Schätzwerte nach herkömmlichen Verfahren in einer zeitlichen Abfolge erfasst werden. So können bei der Positionsbestimmung von Mobilfunktelefonen Reihen von Messwerten aufgenommen und in einem ersten Schätzverfahren eine Spur von Positionen geschätzt werden. Diese Positionen können anschließend korrigiert werden. Dazu kann jede Position durch Punkte gemittelt werden, die sich aus Extrapolationen oder auch Interpolationen aus anderen geschätzten Positionen und geschätzten Geschwindigkeiten ergeben. Die verschiedenen Punkte und Positionen können dabei in Ausführungsbeispielen unterschiedlich stark gewichtet werden, wobei sich das Gewicht einer jeden Position entsprechend ihrer Sicherheit oder Zuverlässigkeit ergeben kann.

Die Zuverlässigkeit lässt sich beispielsweise aus einem Abstand zu zeitlichen Nachbarn und a-priori-Kenntnis über mögliche Geschwindigkeiten, mit denen sich das Mobilfunkendgerät bewegen kann, ermittelt werden. Beispielsweise können für eine Extrapolation der Punkte für ein Mittlungsverfahren geschätzte maximale a-posteriori Geschwindigkeiten verwendet werden. Das Verfahren aus Extrapolation und Mittelung bietet hierbei zur Verbesserung der Genauigkeit die Möglichkeit, durch iterative Fortsetzungen die Genauigkeit weiter zu erhöhen. Ein Schätzwert einer aktuellen Position des Mobilfunktelefons kann dabei beispielsweise der letzte Punkt in einer Reihe der geschätzten Positionen sein. Dieser kann dann, basierend auf verbesserten Schätzwerten vorheriger Positionen ebenfalls mit einer höheren Genauigkeit bestimmt werden.

Genauer geschätzte Aufenthaltspositionen von Mobilfunkendgeräten sind insbesondere in Notfällen von großem Vorteil, denn sie ermöglichen Rettungskräften schneller am Ort des Geschehens zu sein und damit auch eine schnellere Hilfe für die Betroffenen.

Ausführungsbeispiele der vorliegenden Erfindungen werden im Folgenden anhand der beiliegenden Figuren im Detail erläutert. Es zeigen:

Fig. 1a ein Ausführungsbeispiel einer Vorrichtung zum Schätzen;

Fig. 1b ein weiteres Ausführungsbeispiel einer Vorrichtung zum Schätzen;

Fig. 1c ein Beispielsszenario zur Erläuterung einer Schätzung einer Aufenthaltsposition;

Fig. 2 ein weiteres Szenario zur Erläuterung einer Positionsschätzung;

Fig. 3 drei beispielhafte Verläufe einer Rayleighverteilung;

Fig. 3b Diagramm zur Erläuterung einer maximalen a-posteriori Wahrscheinlichkeitsdichte;

Fig. 3c ein weiteres Diagramm zur Erläuterung einer maxi-malen a-posteriori Wahrscheinlichkeitsdichte;

Fig. 3d eine quantisierte a-priori-Wahrscheinlichkeitsdichte;

Fig. 4a eine beispielhafte Verteilung von Schätzpositionen und verbesserten Schätzpositionen;

Fig. 4b ein weiteres Beispiel von Schätzpositionen und verbesserten Schätzpositionen;

Fig. 5a ein weiteres Beispiel einer Verteilung von Schätzpositionen;

Fig. 5b eine Verteilung von zu Schätzpositionen zugehörigen Gewichtungsfaktoren;

Fig. 5c eine Verteilung von zu Schätzpositionen zugehörigengeschätzten Geschwindigkeiten;

Fig. 6 ein System zur Positionsschätzung gemäß dem Stand der Technik; und

Fig. 7 ein Beispiel eines Szenarios zur Erläuterung der Ausbreitungsproblematik in Mobilfunknetzwerken.

Fig. 1a zeigt ein Ausführungsbeispiel einer Vorrichtung 100 zum Schätzen einer Aufenthaltsposition eines Mobilfunkendgerätes mit einer Einrichtung 110 zum Liefern von wenigstens zwei Schätzpositionen zu wenigstens zwei verschiedenen Zeitpunkten und einer Einrichtung 120 zum Bestimmen von Geschwindigkeiten zwischen Schätzpositionen unter Berücksichtigung einer Geschwindigkeitsverteilung. Die Vorrichtung 100 umfasst ferner eine Einrichtung 140 zum Berechnen der Aufenthaltsposition unter Verwendung der wenigstens zwei Schätzpositionen, wenigstens einer Geschwindigkeit, und den wenigstens zwei verschiedenen Zeitpunkten.

Fig. 1b zeigt ein weiteres Ausführungsbeispiel einer Vorrichtung 100 zum Schätzen einer Aufenthaltsposition eines Mobilfunkendgerätes, welches die gleichen Komponenten umfasst wie das Ausführungsbeispiel in der Fig. 1a. Die Vorrichtung 100 umfasst ebenfalls eine Einrichtung 110 zum Liefern, die ausgebildet ist, um wenigstens drei Schätzpositionen zu drei verschiedenen Zeitpunkten zu Liefern und eine Einrichtung 120 zum Bestimmen, die ausgebildet ist, um eine erste Geschwindigkeit zwischen einem ersten Paar von Schätzpositionen und um eine zweite Geschwindigkeit zwischen einem zweiten Paar von Schätzpositionen zu bestimmen, wobei sich das erste Paar von dem zweiten Paar unterscheidet und sich die erste Geschwindigkeit von der zweiten Geschwindigkeit unterscheidet. Die Vorrichtung 100 umfasst ferner eine Einrichtung 130 zu Zuweisen von Gewichtungsfaktoren zu den Schätzpositionen, wobei ein Gewichtungsfaktor einer Schätzposition von einer Geschwindigkeit zwischen der Schätzposition und einer zeitlich benachbarten Schätzposition und von einer zu erwartenden Geschwindigkeitsverteilung des Mobilfunkendgerätes abhängt und die Einrichtung 140 zum Berechnen ferner angepasst ist, um unter Verwendung der wenigstens drei Schätzpositionen, der ersten und der zweiten Geschwindigkeit, der Gewichtungsfaktoren und den wenigsten drei Zeitpunkten die Aufenthaltsposition zu berechnen.

Die Fig. 1c illustriert ein Beispielszenario zum Schätzen einer Aufenthaltsposition. Fig. 1c zeigt drei Schätzpositionen, die durch ihre Ortsvektoren $\boldsymbol{r}_1$, $\boldsymbol{r}_2$ und $\boldsymbol{r}_3$ bestimmt sind. Die drei Schätzpositionen seien ferner zu den drei Zeitpunkten $t_1$, $t_2$ und $t_3$ geschätzt. Aus den Differenzen, $\|\boldsymbol{r}_2-\boldsymbol{r}_1\|$, $\|\boldsymbol{r}_3-\boldsymbol{r}_2\|$ und $\|\boldsymbol{r}_3-\boldsymbol{r}_1\|$, der Ortsvektoren lassen sich räumliche Abstände zwischen den drei Schätzpositionen ermitteln. Aus den Differenzen der drei Zeitpunkte, $|t_2-t_1|$, $|t_3-t_2|$ und $|t_3-t_1|$ lassen sich ferner Zeitspannen ermitteln, in denen die geschätzten räumlichen Distanzen zurückgelegt wurden. Basierend auf den Zeitspannen und den räumlichen Distanzen lassen sich somit Schätzwerte für Geschwindigkeiten ermitteln, die in der Fig. 1c durch die Werte $\boldsymbol{v}_{12}$, $\boldsymbol{v}_{23}$ und $\boldsymbol{v}_{13}$ dargestellt sind.

Geht man nun davon aus, dass über die Geschwindigkeitsverteilung, also über eine Wahrscheinlichkeitsdichte der vorkommenden Geschwindigkeiten, Vorwissen existiert, oder auch eine Verteilung eines Fehlers, der bei der Geschwindigkeitsschätzung entsteht, bekannt sei, so lässt sich beispielsweise eine a-posteriori-Wahrscheinlichkeitsverteilung der Geschwindigkeit ermitteln. Eine a-posteriori-Wahrscheinlichkeitsverteilung entspricht dabei der Wahrscheinlichkeitsverteilung der Geschwindigkeiten, unter der Bedingung, dass eine bestimmte Geschwindigkeit geschätzt wurde.

Dies bedeutet anhand des Beispiels der Fig. 1c, dass basierend auf beispielsweise der Geschwindigkeit $\boldsymbol{v}_{23}$, eine Geschwindigkeit $\boldsymbol{v}_{23}$' ermittelt werden kann, für die eine Auftrittswahrscheinlichkeit, unter der Bedingung, dass $\boldsymbol{v}_{23}$ geschätzt wurde, am größten ist. In einem einfachen Ausführungsbeispiel kann beispielsweise auch von nur zwei Positionen ausgegangen werden, wie es z.B. in dem Ausführungsbeispiel der Fig. 1a der Fall sein könnte und nur die Schätzpositionen $\boldsymbol{r}_2$ und $\boldsymbol{r}_3$ gemäß der Fig. 1c vorliegen könnten. Basierend auf der Position $\boldsymbol{r}_2$ und der geschätzten Geschwindigkeit $\boldsymbol{v}_{23}$' lässt sich dann ein Schätzwert für eine neue dritte Position $\boldsymbol{r}_{23}$' ermitteln. Aus Mittelung oder Kombination der neuen dritten Position $\boldsymbol{r}_{23}$' und der ursprünglichen dritten Position $\boldsymbol{r}_3$, lässt sich nun eine neue Schätzposition $\boldsymbol{r}_3$' bestimmen, die einen geringeren Schätzfehler als $\boldsymbol{r}_3$ aufweist. In analoger Weise ließe sich ebenfalls ein neuer Schätzwert $\boldsymbol{r}_2$' basierend auf den ursprünglichen Schätzpositionen $\boldsymbol{r}_2$ und $\boldsymbol{r}_3$, sowie einer geschätzten Geschwindigkeit $\boldsymbol{v}_{32}$' ermitteln.

In Ausführungsbeispielen kann gemäß der Fig. 1a die Einrichtung (110) zum Liefern demnach ausgebildet sein, um wenigstens eine erste Schätzposition zu einem ersten Zeitpunkt und eine zweite Schätzposition zu einem zweiten späteren Zeitpunkt zu liefern. Die Einrichtung (120) zum Bestimmen kann dann ferner ausgebildet sein, um aus einer räumlichen Distanz zwischen der ersten und der zweiten Schätzpositionen und einer Zeitspanne zwischen dem ersten und dem zweiten Zeitpunkt eine Geschwindigkeit zu schätzen und diese auf eine Höchstgeschwindigkeit zu begrenzen, falls die geschätzte Geschwindigkeit über der Höchstgeschwindigkeit liegt. Die wäre beispielsweise denkbar in einem Szenario, indem bekannt ist, dass nur Fußgänger vorkommen können und somit eine gewisse Höchstgeschwindigkeit, z.B. 10km/h, in der Realität nicht überschritten wird. Ergibt sich in diesem Beispiel aus den beiden Schätzpositionen eine geschätzte Geschwindigkeit die größer als die Höchstgeschwindigkeit ist, so wird die geschätzte Geschwindigkeit auf die Höchstgeschwindigkeit begrenzt.

Die Einrichtung 140 zum Berechnen kann ferner ausgebildet sein, um die Aufenthaltsposition durch Mitteln der zweiten Schätzposition und einer weiteren Schätzposition, die sich aus der ersten Schätzposition, der geschätzten Geschwindigkeit und der Zeitspanne ergibt, zu berechnen. Dies bedeutet für das Beispiel, dass ausgehend von der ersten Schätzposition über die geschätzte Geschwindigkeit, die auf die Höchstgeschwindigkeit begrenzt sein kann, eine neue zweite Schätzposition ermittelt werden kann. Die Mittelung aus der zweiten und der neuen zweiten Schätzposition ergibt dann eine neue Aufenthaltsposition, die zumindest statistisch betrachtet mit einem geringeren Fehler behaftet ist als die zweite Schätzposition.

In analoger Weise lässt sich eine Geschwindigkeit $\boldsymbol{v}_{13}$' ermitteln, auf deren Basis ein zweiter Schätzwert $\boldsymbol{r}_{13}$' aus $\boldsymbol{r}_1$ ermittelt werden kann, in einem Ausführungsbeispiel gemäß der Fig. 1b. Durch Mitteln oder auch gewichtetes Mitteln, der Positionen $\boldsymbol{r}_{23}$', $\boldsymbol{r}_{13}$' und $\boldsymbol{r}_3$ kann nun ein neuer Schätzwert $\boldsymbol{r}_3$' ermittelt werden, dessen Fehler geringer ist. Die Gewichtung der Schätzpositionen kann dabei beispielsweise gemäß einer zugeordneten a-priori-Wahrscheinlichkeitsverteilung der Geschwindigkeiten erfolgen. In analoger Weise können die anderen Schätzpositionen abgeschätzt werden.

In Ausführungsbeispielen kann die Einrichtung 110 zum Liefern ausgebildet sein, um die Schätzpositionen basierend auf an dem Mobilfunkendgerät empfangenen Funksignalen von Basisstations-Sende-Empfängern zu liefern. Dabei können in Ausführungsbeispielen beispielsweise die Schätzpositionen basierend auf Empfangspegelmessungen der Basisstations-Sende-Empfänger, der Basisstations-Sende-Empfängerpositionen und/oder der Abstrahlcharakteristika der Basisstations-Sende-Empfänger-Antennen berücksichtigt werden. In Ausführungsbeispielen können dabei Signal-zu-Rausch-Verhältnisse bzw. Signal-zu-Rausch-und-Interferenz-Verhältnisse der Basisstations-Sende-Empfänger herangezogen werden. Beispielsweise wäre auch eine Positionsbestimmung basierend auf RSSI-Werten (RSSI = Received Signal Strength Indicator, Empfangsleistungsstärkenindikator) denkbar.

Ferner können in anderen Ausführungsbeispielen die Schätzpositionen basierend auf virtuellen Schwerpunkten von Mobilfunkzellen bestimmt werden, deren Signale von dem Mobilfunkendgerät empfangen werden. In weiteren Ausführungsbeispielen können auch GPS-Empfänger zum Einsatz kommen, um zunächst Positionen zu bestimmen, deren Genauigkeit mit dem erfindungsgemäßen Verfahren weiter verbessert werden kann.

Hinsichtlich der Zeitpunkte, zu denen die Schätzpositionen bestimmt werden, können sowohl äquidistante Zeitpunkte als auch unregelmäßige Zeitpunkte in Ausführungsbeispielen vorkommen. In Ausführungsbeispielen kann die Einrichtung 120 zum Bestimmen ausgebildet sein, um aus Abständen zwischen den wenigstens zwei Schätzpositionen und den Zeitspannen zwischen den wenigstens zwei Zeitpunkten die Geschwindigkeiten zu bestimmen. Dabei kann die Einrichtung 120 ferner Vorwissen über die Verteilung von Geschwindigkeiten, oder Messfehlern bei der Bestimmung einer Geschwindigkeit berücksichtigen. Beispielsweise kann die Einrichtung 120 zum Bestimmen auch ausgebildet sein, um aus Paaren von Schätzpositionen Geschwindigkeiten mit höchsten a-posteriori Auftrittswahrscheinlichkeiten für die Paare von Schätzpositionen und Fehlerwahrscheinlichkeiten zu bestimmen. Dabei kann beispielsweise auch eine maximale Geschwindigkeit berücksichtigt werden. Vielerlei Geschwindigkeitsverteilungen, das heißt Wahrscheinlichkeitsdichten für vorkommende Geschwindigkeiten, können dabei zugrunde gelegt werden. Beispielsweise können Gauß-verteilte, exponentialverteilte, gleichverteilte oder auch andere Geschwindigkeitsverteilungen berücksichtigt werden.

In Ausführungsbeispielen kann die Einrichtung 130 zum Zuweisen ausgebildet sein, um einer Schätzposition aus der sich eine Geschwindigkeit mit einer hohen a-priori Auftrittswahrscheinlichkeit ergibt einen größeren Gewichtungsfaktor zuzuweisen als einer Schätzposition aus der sich eine Geschwindigkeit mit einer niedrigen a-priori-Auftrittswahrscheinlichkeit ergibt. In Ausführungsbeispielen könnte die Einrichtung 130 zum Zuweisen ausgebildet sein, um einer Schätzposition aus der sich eine Geschwindigkeit ergibt als Gewichtungsfaktor die a-priori-Auftrittswahrscheinlichkeit der Geschwindigkeit auch direkt zuzuweisen.

Die Einrichtung 140 zum Berechnen der Aufenthaltsposition kann in Ausführungsbeispielen ausgebildet sein, um die Aufenthaltsposition des Mobilfunkendgerätes durch Interpolation oder Extrapolation aus den wenigstens zwei Schätzpositionen, einer Geschwindigkeit, einem Gewichtungsfaktor und den wenigsten zwei Zeitpunkten zu berechnen. Ferner kann die Einrichtung 140 zum Berechnen ausgebildet sein, um aus den Schätzpositionen und den Geschwindigkeiten neue Schätzpositionen für die Zeitpunkte zu bestimmen und um aus den neuen Schätzpositionen und den Gewichtungsfaktoren die Aufenthaltsposition zu berechnen. Ferner kann die Einrichtung 140 zum Berechnen ausgebildet sein, um die Schätzpositionen und die neuen Schätzpositionen zu mitteln.

Ausführungsbeispiele der Vorrichtung 100 können ausgebildet sein, um die Aufenthaltsposition iterativ zu bestimmen, bzw. die Genauigkeit der Aufenthaltspositionsbestimmung iterativ zu verbessern. Dabei kann die Einrichtung 140 zum Berechnen ausgebildet sein, um die Aufenthaltsposition und neue Schätzpositionen zu berechnen, wobei dann die Einrichtung 120 zum Bestimmen ausgebildet sein kann, um basierend auf den neuen Schätzpositionen und der Aufenthaltspositionen neue Geschwindigkeiten zu bestimmen und die Einrichtung 130 zum Zuweisen können ferner ausgebildet sein, um neue Gewichtungsfaktoren zu den neuen Schätzpositionen, zuzuweisen.

Im Folgenden werden Ausführungsbeispiele der vorliegenden Erfindung im Detail erläutert. Eine Berücksichtigung und geschickte Auswertung der Bewegung eines sich bewegenden Mobiltelefons kann die Genauigkeit der Positionsschätzung verbessern. In zeitlich regelmäßigen oder zeitlich unregelmäßigen Abständen werden Messwerte gesammelt, auf deren Grundlage mit einem Schätzverfahren N Positionen

$$\boldsymbol{r}_i = \begin{pmatrix} \hat{x}_i \\ \hat{y}_i \end{pmatrix}, \qquad (10)$$

eines Mobiltelefons MS geschätzt werden, wobei i, N Elemente der natürlichen Zahlen sind und $0 \leq i < N$. Mit den Zeitpunkten $t_i$, zu denen das Mobiltelefon in den Positionen $\boldsymbol{r}_i$ vermutet wird, den wahren Positionen $\boldsymbol{p}_i$ des Mobiltelefons zu den Zeitpunkten $t_i$ und den Schätzfehlern $\boldsymbol{b}_i+\boldsymbol{n}_i$ zu den Zeitpunkten $t_i$, ergeben sich die geschätzten Positionen zu

$$\boldsymbol{r}_i = \boldsymbol{p}_i + \boldsymbol{b}_i + \boldsymbol{n}_i . \qquad (11)$$

Die Vektoren $\boldsymbol{b}_i$ und $\boldsymbol{n}_i$ werden als mittelwertfreie, zeitinvariante Zufallsvariablen angenommen, deren Varianzen nicht vom Zeitpunkt $t_i$ abhängen. Ferner seien $\boldsymbol{b}_i$ und $\boldsymbol{n}_i$ unkorreliert. Der mittlere quadratische Schätzfehler zum Zeitpunkt $t_i$ ergibt sich damit zu

$$E\left\{\left\|\boldsymbol{p}_i - \boldsymbol{r}_i\right\|^2\right\} = E\left\{\left\|\boldsymbol{b}_i + \boldsymbol{n}_i\right\|^2\right\} = E\left\{\boldsymbol{b}_i \cdot \boldsymbol{b}_i\right\} + 2 \cdot E\left\{\boldsymbol{b}_i \cdot \boldsymbol{n}_i\right\} + E\left\{\boldsymbol{n}_i \cdot \boldsymbol{n}_i\right\} = \sigma_{\boldsymbol{b}}^2 + \sigma_{\boldsymbol{n}}^2 \qquad (12)$$

‖**Vector**‖ stellt den Betrag des Vektors **Vector** dar. Es sei angemerkt, dass gemäß (1) von einem kartesischen Koordinatensystem ausgegangen wird. Durch Mittelung der geschätzten Positionen $\boldsymbol{r}_i$ kann eine mittlere Position

$$\bar{\boldsymbol{r}} = \frac{1}{\mathrm{N}} \sum_{i=0}^{\mathrm{N}-1} \boldsymbol{r}_i \qquad (13)$$

bestimmt werden. Unter Berücksichtigung von (12) ergibt sich der mittlere Quadratische Fehler der gemittelten Position zu

$$E\left\{\left\|\frac{1}{N}\sum_{i=0}^{N-1}\boldsymbol{r}_i-\frac{1}{N}\sum_{i=0}^{N-1}\boldsymbol{p}_i\right\|^2\right\}=\frac{1}{N^2}\sum_{i=0}^{N-1}E\left\{\left\|\boldsymbol{r}_i-\boldsymbol{p}_i\right\|^2\right\}=\frac{1}{N^2}\cdot N\left(\sigma_b^2+\sigma_n^2\right)=\frac{\sigma_b^2+\sigma_n^2}{N}. \qquad (14)$$

Der Schätzfehler der gemittelten Position des Mobiltelefons wird also umso kleiner, je mehr Messpunkte berücksichtigt werden.

Die Fig. 2 zeigt ein Szenario zur Erläuterung einer Positionsschätzung bei bewegtem Ziel in einer NLOS-Funkumgebung. Die Fig. 2 zeigt einen Basisstations-Sende-Empfänger 210, der auch als BTS 1 bezeichnet ist, einen Basisstations-Sende-Empfänger 220, der auch als BTS 2 bezeichnet ist, einen Basisstations-Sende-Empfänger 230, der auch als BTS 3 bezeichnet ist und einen Basisstations-Sende-Empfänger 240, der auch als BTS 4 bezeichnet ist. Ferner zeigt die Fig. 2 ein erstes Hindernis 250 und ein zweites Hindernis 260. Ferner ist in der Fig. 2 eine Mobilstation MS gezeigt, die sich zu einem ersten Zeitpunkt in der Position $\boldsymbol{p}_1$ und zu einem zweiten Zeitpunkt in der Position $\boldsymbol{p}_2$ befindet. In der Fig. 2 ist eine erste geschätzte Position $r_1$ und eine zweite geschätzte Position $r_2$ einer Mobilstation MS eingezeichnet. Ferner befindet sich in der Mitte der Fig. 2 eine Kennzeichnung der mittleren Position $\bar{r}$ der Mobilstation MS, die sich aus der Mittelung der Schätzwerte ergibt. Im Folgenden werden Vektoren als fettgedruckte Kleinbuchstaben gekennzeichnet.

Die folgende Überlegung soll Ausführungsbeispiele der vorliegenden Erfindung veranschaulichen. Fig. 2 zeigt ein Mobiltelefon MS zu den beiden Zeitpunkten $t_1$ (MS in Position 1, fett eingezeichnet) und $t_2$ (MS in Position 2, fett eingezeichnet). Das Mobiltelefon wird von den vier Basisstationen BTS 1, BTS 2, BTS 3 und BTS 4 umgeben. Es werden Positionsschätzungen durchgeführt. Diese basieren beispielsweise auf Messwerten von Signallaufzeiten und/oder Empfangsleistungen von Signalen, die zwischen dem Mobiltelefon und den Basisstationen ausgetauscht werden. In Position 1 wird das Mobiltelefon MS durch das Hindernis 1 von BTS 3 und BTS 4 abgeschattet. Die Signale von BTS 3 und BTS 4 erreichen das Mobiltelefon auf indirektem Weg (NLOS). Die Signale von BTS 1 und BTS 2 erreichen das Mobiltelefon auf direktem Weg (LOS). Dadurch werden die Distanzen zwischen MS und BTS 3 sowie zwischen MS und BTS 4 überschätzt, wodurch ein zusätzlicher NLOS-Fehler $\boldsymbol{b}_1$ resultiert.

Die zum Zeitpunkt $t_1$ geschätzte Position ist in im Schätzpunkt 1 durch ein dünn eingezeichnetes Mobiltelefon gekennzeichnet. Der Schätzfehler $\boldsymbol{b}_1+\boldsymbol{n}_1$ ist die räumliche Differenz zwischen Schätzpunkt 1 und Position 1. In der Zeit $t_2$-$t_1$ bewegt sich das Mobiltelefon in die in eingezeichnete Bewegungsrichtung. Zum Zeitpunkt $t_2$ befindet sich das Mobiltelefon MS in Position 2. In Position 2 wird das Mobiltelefon durch das Hindernis 2 von BTS 1 und BTS 2 abgeschattet. Die Signale von BTS 1 und BTS 2 erreichen das Mobiltelefon auf indirektem Weg (NLOS). Die Signale von BTS 3 und BTS 4 erreichen das Mobiltelefon auf direktem Weg (LOS). Dadurch werden die Distanzen zwischen MS und BTS 1, sowie zwischen MS und BTS 2 überschätzt, wodurch ein zusätzlicher NLOS-Fehler $\boldsymbol{b}_2$ resultiert. Die zum Zeitpunkt $t_2$ geschätzte Position im Schätzpunkt 2 durch ein dünn eingezeichnetes Mobiltelefon gekennzeichnet.

Der Schätzfehler $\boldsymbol{b}_2+\boldsymbol{n}_2$ ist die räumliche Differenz zwischen Schätzpunkt 2 und Position 2. In dem eingezeichneten Beispiel haben Schätzfehler 1 und Schätzfehler 2 gleiche Beträge und entgegengesetzte Richtungen. Daher heben sich bei einer Mittelung der geschätzten Positionen die beiden Schätzfehler auf und es ergibt sich die richtige mittlere Position $\bar{\boldsymbol{r}}$ des Mobiltelefons MS. Im Allgemeinen werden sich die Schätzfehler nicht vollständig aufheben. Weil aber davon auszugehen ist, dass die Schätzfehler $\boldsymbol{b}_i+\boldsymbol{n}_i$ mittelwertfrei sind, ist der Fehler der gemittelten geschätzten Position $\bar{\boldsymbol{r}}$ kleiner als der Fehler einzelner geschätzter Positionen $\boldsymbol{r}_i$. Dieser Sachverhalt wurde bereits in (14) gezeigt.

Alternativ zu sind auch andere Rechenvorschriften denkbar, welche bei der Berechnung einer mittleren Position $\tilde{\boldsymbol{r}}$ die einzelnen Schätzpunkte unterschiedlich stark gewichten. Beispielsweise kann durch eine stärkere Gewichtung jüngerer Schätzpunkte und einer entsprechend schwächeren Gewichtung älterer Schätzpunkte, die gemittelte Position in Richtung des aktuellen Aufenthaltsortes des Mobiltelefons verschoben werden. Auch ist es denkbar, den Schätzpunkten $\boldsymbol{r}_i$ Zuverlässigkeitswerte zuzuordnen und die Schätzpunkte $\boldsymbol{r}_i$ gemäß ihrer zugehörigen Zuverlässigkeit oder Wahrscheinlichkeit zu gewichten. Die Zuverlässigkeit eines Schätzpunktes $\boldsymbol{r}_i$ kann zum Beispiel auf Basis des räumlichen Abstandes zu zeitlich benachbarten Schätzpunkten und der zu erwartenden Geschwindigkeit mit der sich das Mobiltelefon bewegt, gefunden werden.

Mit den Gewichten $\boldsymbol{c}_i$>0, wobei die $\boldsymbol{c}_i$ aus der Menge der reellen Zahlen stammen, ergibt sich die ungleichmäßig gemittelte Position $\tilde{\boldsymbol{r}}$ zu

$$\tilde{\boldsymbol{r}} = \frac{1}{\sum_{i=1}^{N} c_i} \cdot \sum_{i=1}^{N} \left( c_i \cdot \boldsymbol{r}_i \right) \qquad (15)$$

Für den Spezialfall $\boldsymbol{c}_i$=const für alle i, ergibt sich aus der Gleichung (15) die Gleichung (13). Die Koeffizienten $\boldsymbol{c}_i$ können als Filterkoeffizienten aufgefasst werden. Eine Filterung der aufgenommenen Spur als Faltung normierter Filterkoeffizienten mit der Folge von geschätzten Positionen kann einzelne Ausreißer mit großen Schätzfehlern korrigieren und so den mittleren Schätzfehler verringern. Die durch Filterung korrigierte Position $\tilde{\boldsymbol{r}}_i$ ergibt sich dann mit der freiwählbaren Filterlänge oder Gedächtnislänge 2L+1 zu

$$\tilde{\boldsymbol{r}}_i = \frac{1}{\sum_{k=\max(0,i-L)}^{\min(N-1,i+L)} c_{i,k}} \cdot \sum_{k=\max(0,i-L)}^{\min(N-1,i+L)} c_{i,k} \cdot \boldsymbol{r}_k \qquad (16)$$

Jedoch werden bei einem solchen Verfahren auch richtig geschätzte Positionen in Richtung der mittleren Position verschoben. Dies betrifft insbesondere jene Positionen, die sich am Rand des Beobachtungsgebietes befinden. Geschätzte Positionen, die sich an einem zeitlichen Rand des Beobachtungsintervalls $[t_0, t_{N-1}]$ befinden, über den Positionsschätzungen durchgeführt wurden, liegen bei bewegten Mobiltelefonen sehr oft auch am Rand des Beobachtungsgebietes. Damit sind sie von Verfälschungen durch eine Filterung stärker betroffen als andere Positionen. Es ist zu beachten, dass die tatsächliche, aktuelle Position, in der sich das Mobiltelefon gegenwärtig aufhält, im Allgemeinen der zuletzt geschätzten Position am nächsten ist. Genau diese Position liegt aber zeitlichen Rand des Beobachtungsintervalls, wird durch eine Filterung als gewichtete Mittelung zeitlich benachbarter Positionen also besonders verfälscht. Um dieser Verfälschung entgegenzuwirken, sehen Ausführungsbeispiele der vorliegenden Erfindung beispielsweise vor, für die gewichtete Mittelung und die Korrektur eines Referenzpunktes $\boldsymbol{r}_i$ nicht mehr die zeitlich benachbarten Positionen $\boldsymbol{r}_k$ zu verwenden, sondern aus den benachbarten Positionen $\boldsymbol{r}_k$ und Schätzwerten der Geschwindigkeit des Mobiltelefons den Referenzpunkt zu interpolieren oder zu extrapolieren. Die korrigierte Position ergibt sich dann aus der ursprünglichen Position $\boldsymbol{r}_i$ und den Extrapolationen dieser Position aus benachbarten Punkten.

Aus den geschätzten Positionen $\boldsymbol{r}_i$, $i$={0,···,N-1}, zu den Zeitpunkten $t_i$ ergeben sich Schätzwerte für die Geschwindigkeit zu

$$\boldsymbol{v}_i = \frac{\boldsymbol{r}_{i+1} - \boldsymbol{r}_i}{t_{i+1} - t_i}, \qquad i = \{0, \cdots, N-2\}. \qquad (17)$$

Wenn die der Geschwindigkeitsschätzung zugrundeliegenden Positionen von einer mittelwertfreien, normalverteilten Störung überlagert sind, so ist auch die geschätzte Geschwindigkeit von einer mittelwertfreien, normalverteilten Zufallsvariable überlagert. Die Wahrscheinlichkeitsdichtefunktion vom Betrag $v_i = \|\boldsymbol{v}_i\|$ der geschätzten Geschwindigkeit $\boldsymbol{v}_i$ ist dann unter der Annahme einer bestimmten, tatsächlichen Geschwindigkeit $v'$ Rayleigh-verteilt und hat die Wahrscheinlichkeitsdichtefunktion

$$p_v(v \mid \sigma) = \frac{v}{\sigma^2} \cdot e^{-\frac{v^2}{2\sigma^2}}. \qquad (18)$$

Die Fig. 3a zeigt Rayleighverteilungen der Geschwindigkeit v für verschiedene Erwartungs- bzw. Mittelwerte

$$\bar{v} = E\{v_i\} = \int v \cdot p_v(v \mid \sigma) \mathrm{d}v = \sigma \cdot \sqrt{\frac{\pi}{2}} \qquad (19),$$

mit **E**{***v***}=10, **E**{***v***}=20 beziehungsweise **E**{***v***}=30.

Es können auch andere Störquellen angenommen werden, die zu anderen Wahrscheinlichkeitsdichtefunktionen führen. Zur Vereinfachung wird angenommen, dass die Störung auf dem Betrag der geschätzten Geschwindigkeit *v* in erster Näherung normalverteilt ist. Die bedingte Geschwindigkeitsverteilung ist dann Gauß-verteilt. Es gilt:

$$p_v(v \mid v') = \frac{1}{\sqrt{2\pi\sigma_n}} e^{\frac{(v-v')^2}{2\sigma_n^2}} . \qquad (20)$$

Wenn a-priori-Information in Form einer Wahrscheinlichkeitsdichtefunktion $p_{a\text{-priori}}(v')$ für die tatsächliche Geschwindigkeit *v'* vorliegt, folgt umgekehrt aus dem Bayestheorem, dass die Dichteverteilung $p_{a\text{-posteriori}}(v'|v)$ der a-posteriori-Wahrscheinlichkeit für die tatsächliche Geschwindigkeit *v'* unter Annahme der beobachteten Geschwindigkeit *v* proportional ist zum Produkt aus a-priori Wahrscheinlichkeitsdichte $p_{a\text{-priori}}(v')$ und bedingter Wahrscheinlichkeitsdichte $p_v(v|v')$:

$$p_{a-posteriori}(v' \mid v) = \frac{p_v(v \mid v') \cdot p_{a-priori}(v')}{\int p_v(v \mid v') \cdot p_{a-priori}(v')} . \qquad (21)$$

Für die a-priori Geschwindigkeit ist es eine sinnvolle Annahme davon auszugehen, dass sie eine maximale Geschwindigkeit $v_{max}$ nicht überschreitet. Eine sinnvolle maximale Geschwindigkeit ist zum Beispiel die Lichtgeschwindigkeit, da sich kein Mobiltelefon schneller als das Licht bewegen kann, ohne dass die Funkverbindung dabei abreißen würde. Eine andere sinnvolle maximale Geschwindigkeit $v_{max}$ wäre die maximale Geschwindigkeit, für welche das Mobilfunksystem spezifiziert ist. Abhängig von der Anwendung sind weitere Geschwindigkeitseinschränkungen sinnvoll.

In einer für Fußgänger konzipierten Anwendung beispielsweise, wäre $v_{max}$=10,35m/s eine sinnvolle Einschränkung. Dies entspricht der Durchschnittsgeschwindigkeit, mit der Michael Johnson im Jahre 1996 in 19,32Sekunden den Weltrekord im 200-Meter-Lauf aufstellte. Ohne weitere Einschränkungen kann die a-priori-Wahrscheinlichkeitsdichte als gleichverteilt angenommen werden. Die Fig. 3b zeigt eine gleichverteilte a-priori Wahrscheinlichkeitsdichte

$$p_{\text{a-priori}}(v') = \begin{cases} \frac{1}{v_{\max}} & , \text{ wenn } v' \le v_{\max} \\ 0 & , \text{ wenn } v' > v_{\max} \end{cases} \qquad (22)$$

mit $v_{max}$=70m/s, eine normalverteilte bedingte Wahrscheinlichkeitsdichte $p_v(v|v')$ für die geschätzte Geschwindigkeit ***v***=120m/s und die sich daraus ergebende a-posteriori-Wahrscheinlichkeitsdichte $p_{a\text{-posteri}}o_{ri}(v'1v)$ unter der Annahme der beobachteten Geschwindigkeit ***v***.

Ein beobachteter oder nach Gleichung (17) geschätzter Geschwindigkeitsvektor $\boldsymbol{v}_i$ kann mit den gemachten Überlegungen so korrigiert werden, dass sein Betrag dem Maximum der bedingten a-posteriori-Wahrscheinlichkeit entspricht. Die derart korrigierte Geschwindigkeit $\tilde{\boldsymbol{v}}_i$ ergibt sich zu

$$\tilde{\boldsymbol{v}}_i = \arg\max_{v'} \left\{ p_{\text{a-posteriori}} \left( v' \mid \|\boldsymbol{v}_i\| \right) \right\} \cdot \frac{\boldsymbol{v}_i}{\|\boldsymbol{v}_i\|} \, . \qquad (23)$$

In Fig. 3b markiert ein graufarbenes Karo das Maximum $\arg\max_{v} \left\{ p_{\text{a-posteriori}} \left( v' \mid v \right) \right\}$ der a-posteriori-Wahrscheinlichkeitsdichte. Für den Fall gleichverteilter a-priori-Wahrscheinlichkeitsdichte $p_{a\text{-}priori}(v')$ ergibt sich das Maximum zu

$$\arg\max_{v'} \left\{ p_{\text{a-posteriori}} \left( v' \mid v \right) \right\} = \begin{cases} v_{\max} & \text{, wenn } v \geq v_{\max} \\ v & \text{, wenn } v < v_{\max} \end{cases} . \qquad (24)$$

Eine andere sinnvolle anzunehmende a-priori-Wahrscheinlichkeitsdichte ist die Exponentialverteilung. Fig. 3c zeigt eine Exponentialverteilte a-priori-Wahrscheinlichkeitsdichte $p_{a\text{-}priori}(v')$ mit dem Mittelwert $\boldsymbol{v}$=2m/s. Fig. 3c zeigt ferner eine Gauß-verteilte bedingte Wahrscheinlichkeitsdichte $p_V(v|v')$ für eine beobachtete Geschwindigkeit v=20m/s; eine weitere Kurve zeigt die sich ergebende a-posteriori-Wahrscheinlichkeitsdichte $p_{\text{a-posteriori}}(v'|v)$. Die maximum-a-posteriori-Geschwindigkeit ist durch ein Karo gekennzeichnet.

In einem Digitalrechner kann die a-priori-Wahrscheinlichkeitsdichte quantisiert in einer Tabelle abgelegt werden. Fig. 3d zeigt ein Beispiel einer quantisierten Wahrscheinlichkeitsdichte, wie sie in einem Digitalrechner verwendet werden kann, um eine maximum-a-posteriori Geschwindigkeit einer beobachteten Geschwindigkeit $\boldsymbol{v}_i$ entsprechend obiger Gleichungen zu bestimmen. Um im späteren Verlauf numerischen Problemen entgegenzuwirken, ist der Rückgabewert der in Fig. 3d dargestellten a-priori-Wahrscheinlichkeitsdichtefunktion auf eine Geschwindigkeit $v'$ nie gleich 0

$$p_{\text{a-priori, digital}} \left( v' \right) > 0 \ , \ \forall v' \geq 0 \qquad (25)$$

Die ermittelten Maximum-a-posteriori Geschwindigkeiten können verwendet werden, um die geschätzten Positionen $\boldsymbol{r}_i$ zu korrigieren. Die von $\boldsymbol{r}_k$ im Zeitpunkt $t_k$ auf $\boldsymbol{r}_i$ extrapolierte Position im Zeitpunkt $t_k$ ergibt sich mit der nach Gleichung (23) korrigierten Geschwindigkeit $\tilde{\boldsymbol{v}}_k$ zu

$$\tilde{\boldsymbol{r}}_{i|k} = \boldsymbol{r}_k + \tilde{\boldsymbol{v}}_k \cdot \left( t_i - t_k \right) . \qquad (26)$$

Die Punkte $\tilde{\boldsymbol{r}}_{i|k}$ und $\boldsymbol{r}_i$ können nun mit Koeffizienten $c_i$, $c_k$ gewichtet und zu einer korrigierten Position $\tilde{\boldsymbol{r}}_i$ von $\boldsymbol{r}_i$ gemittelt werden. Die Koeffizienten $c_i$ können hierbei ein Maß für die Sicherheit oder Zuverlässigkeit der geschätzten Position $\hat{\boldsymbol{r}}_i$ repräsentieren und beispielsweise proportional zum Produkt über die a-priori-Wahrscheinlichkeitsdichten der geschätzten Geschwindigkeiten in der Umgebung von $\tilde{\boldsymbol{r}}_i$ sein. Positionen $\tilde{\boldsymbol{r}}_i$, die stark von einer erwarteten Bahn oder Spur von Positionen abweichen, sollen dadurch weniger stark ins Gewicht fallen als jene Positionen, die den a-priori Erwartungen entsprechen. Mit der frei wählbaren Filterlänge oder Gedächtnislänge 2L+1 ergeben sich die Koeffizienten $c_i$ beispielsweise zu

$$c_i = \left[ \prod_{\substack{k=\max(0,\, i-L) \\ k \neq i}}^{\min(N-1,\, i+L)} p_{\text{a-priori, digital}} \left( \frac{\|\boldsymbol{r}_k - \boldsymbol{r}_i\|}{|t_k - t_i|} \right) \right]^{\frac{1}{\min(N-1,\, i+L)-\max(0,\, i-L)}} . \quad (27)$$

Weil $p_{\text{a-priori,digital}}(v')$ gemäß Gleichung (25) immer positiv ist, können die Koeffizienten $c_i$ nicht Null werden. Die "min(N-1,$i$+L)-max(0,$i$-L)"-te Wurzel wird in diesem Ausführungsbeispiel gezogen, um auf die Anzahl der Stützstellen $\boldsymbol{r}_k$ zu normieren. $c_i$ ist in diesem Ausführungsbeispiel also das geometrisch Mittel der a-priori-Wahrscheinlichkeiten dafür, dass sich das Mobiltelefon in den Zeiten $t_k$-$t_i$ von den Punkten $\boldsymbol{r}_k$ zum Punkt $\boldsymbol{r}_i$ bewegen kann.

Mit den Koeffizienten $c_i$ aus (27) können die geschätzten Positionen $\boldsymbol{r}_i$ iterativ korrigiert werden. Die Positionen $\boldsymbol{r}_i$(l+1) der ($l$+1)-sten Iteration ergeben sich mit der frei wählbaren Filterlänge 2L+1 aus den Positionen $\boldsymbol{r}_i(l)$ der $l$-ten Iteration zu

$$\boldsymbol{r}_i(l+1) = \frac{\sum_{k=\min\{0,i-L\}}^{\max\{i+L,\,N-1\}} c_k \cdot \left[ \boldsymbol{r}_k(l) + \arg\max_{v'} \left\{ p_{\text{a-posteriori}} \left( v' \middle| \frac{\|\boldsymbol{r}_i(l) - \boldsymbol{r}_k(l)\|}{|t_i - t_k|} \right) \right\} \cdot \frac{\boldsymbol{r}_i(l) - \boldsymbol{r}_k(l)}{\|\boldsymbol{r}_i(l) - \boldsymbol{r}_k(l)\|} \cdot |t_i - t_k| \right]}{\sum_{k=\min\{0,i-L\}}^{\max\{i+L,\,N-1\}} c_k}$$

.

(28)

Die Koeffizienten $c_i$ müssen nach jeder Iteration gemäß Gleichung (27) neu bestimmt werden.

Für das iterative Verfahren sind in Ausführungsbeispielen beispielsweise folgende Abbruchkriterien denkbar. Wenn sich die Koeffizienten $c_i$ und die Positionen $\boldsymbol{r}_i$ nicht mehr verändern, dann ist das Verfahren konvergiert und kann abgebrochen werden. Wenn die Anzahl der Iterationen eine zuvor vorgegebene Grenze überschreitet, muss das Verfahren ebenfalls abgebrochen werden, um Zeit- und Rechenaufwand zu begrenzen. Auch wenn die bedingte Wahrscheinlichkeitsdichte für die gesuchte Position $\boldsymbol{r}_i$ eine definierte Schranke überschreitet, welche einer geforderten Sicherheit entspricht, ist ein Abbruch des Verfahrens sinnvoll.

Die Fig. 4a zeigt eine Ebene mit den Koordinaten x, y und verdeutlicht an einem Beispiel, wie sich die Lage von geschätzten Positionen nach mehreren Iterationen verändert. Die schwarzen sternförmigen Marker zeigen die ursprünglich geschätzten Positionen. Diese treten an drei Ballungsorten auf. Zuerst im Bereich der Koordinaten (x, y) = (0, 0), dann bei (100m, -50m) und schließlich im Bereich (50m, 50m). Nach einer ersten Iteration werden durch das beschriebene Verfahren die mit den dunkelgrauen diamandförmigen Markern dargestellten Positionen geschätzt, nach drei Iterationen die Positionen, die mit hellgrauen quadratischen Markern gekennzeichnet sind. Es ist deutlich zu erkennen wie sich die korrigierten Positionen gleichmäßiger zwischen den Ballungszentren verteilen, bzw. wie sich die Schätzfehler reduzieren.

Die folgende Tabelle 1 zeigt die zu der Fig. 4a gehörenden Koordinaten $\boldsymbol{r}_i$=($x_i$,$y_i$), die Beträge |$\boldsymbol{v}$| geschätzter Geschwindigkeiten und die Gewichte $c_i$. In dem hier dargestellten Beispiel wurde für die Ermittlung der Koeffizienten nach Gleichung (27) eine Filterlänge von 2L+1=11 verwendet. Nach der dritten Iteration ändern sich die Koeffizienten $c_i$ nur noch unwesentlich, sodass hier ein Abbruch sinnvoll ist.

Das Auftreten von Schätzwerten in Ballungsräumen kann häufig beobachtet werden, wenn die der Schätzung zugrundeliegenden Messwerte sehr grob quantisiert sind. Dies ist zum Beispiel bei die Signalleistungspegeln RSSI oder dem Wert des Timing Advance TA der Fall.

Tabelle 1: Koordinaten und Gewichte im Fallbeispiel 1

| x 0/10m | y0/10m | \|v\| | c | x1/10m | y1/10m |
|---|---|---|---|---|---|
| -0,22 | 0,16 | 1,65 | 0,2221 | -0,22 | 0,16 |
| 1,3 | 0,79 | 1,71 | 0,1817 | 0,5 | 0,16 |
| 0,27 | -0,58 | 1,18 | 0,1251 | 0,49 | 0,29 |
| -0,14 | 0,53 | 1,18 | 0,088 | -0,09 | 0,54 |
| -0,41 | 1,67 | 11,44 | 0,0535 | 4,89 | -1,82 |
| 9,41 | -4,2 | 1,11 | 0,0747 | 7,63 | -3,1 |
| 10,52 | -4,12 | 2,3 | 0,0842 | 9,82 | -4,38 |
| 8,51 | -5,22 | 1,5 | 0,0903 | 9,36 | -4,82 |
| 9,91 | -4,7 | 0,82 | 0,0747 | 9,53 | -5,08 |
| 9,99 | -5,52 | 11,66 | 0,0778 | 7,72 | -0,95 |
| 4,65 | 4,84 | 1,33 | 0,0691 | 6,13 | 2,16 |
| 5,99 | 4,9 | 1,15 | 0,0837 | 5,64 | 5,11 |
| 5,64 | 6 | 2,35 | 0,1026 | 6,23 | 5,63 |
| 7,92 | 5,43 | 4,19 | 0,0858 | 5,86 | 5,42 |
| 3,75 | 4,97 | | 0,1125 | 4,9 | 5,1 |
| | | | | c_min1 = 0,0535153112467953 | |
| | | | | c_max1 = 0,222064303492292 | |
| | | | | c_min1/c_max1 = 0,240990156478044 | |
| | | | | | |
| X1/10m | y1/10m | \|v\| | c | x2/10m | y2/10m |
| -0,22 | 0,16 | 0,73 | 0,2551 | -0,22 | 0,16 |
| 0,5 | 0,16 | 0,12 | 0,2182 | 0,28 | 0,2 |
| 0,49 | 0,29 | 0,63 | 0,1601 | 0,28 | 0,33 |
| -0,09 | 0,54 | 5,51 | 0,0637 | 2,8 | -0,82 |
| 4,89 | -1,82 | 3,03 | 0,0922 | 4,26 | -1,52 |
| 7,63 | -3,1 | 2,54 | 0,1037 | 7,5 | -3,1 |
| 9,82 | -4,38 | 0,64 | 0,1137 | 9,24 | -4,2 |
| 9,36 | -4,82 | 0,32 | 0, 1431 | 9,51 | -4,78 |
| 9,53 | -5,08 | 4,51 | 0,0747 | 8,64 | -3,09 |
| 7,72 | -0,95 | 3,5 | 0,0769 | 7,83 | -1,31 |
| 6,13 | 2,16 | 2,99 | 0,0922 | 6,39 | 2,03 |
| 5,64 | 5,11 | 0,78 | 0,0849 | 5,87 | 4,6 |
| 6,23 | 5,63 | 0,42 | 0,1768 | 6,1 | 5,53 |
| 5,86 | 5,42 | 1,01 | 0,204 | 5,74 | 5,4 |
| 4,9 | 5,1 | | 0,2551 | 5,18 | 5,19 |

(fortgesetzt)

| X1/10m | y1/10m | \|v\| | c | x2/10m | y2/10m |
|---|---|---|---|---|---|
| c_min1 = 0,0535153112467953 | | | | c_min2 = 0,06366789194265116 | |
| c_max1 = 0,222064303492292 | | | | c_max2 = 0,25508490012515816 | |
| c_min1/c_max1 = 0,240990156478044 | | | | c_min2/c_max2 = 0,24959490707373239 | |
| | | | | | |
| x2/10m | y1/10m | \|v\| | c | x3/10m | y3/10m |
| -0,22 | 0,16 | 0,51 | 0,2352 | -0,22 | 0,16 |
| 0,28 | 0,2 | 0,14 | 0,2289 | 0,14 | 0,23 |
| 0,28 | 0,33 | 2,77 | 0,1369 | 1,16 | -0,12 |
| 2,8 | -0,82 | 1,62 | 0,1542 | 2,55 | -0,71 |
| 4,26 | -1,52 | 3,6 | 0,119 | 4,92 | -1,85 |
| 7,5 | -3,1 | 2,06 | 0,1306 | 7,11 | -2,95 |
| 9,24 | -4,2 | 0,64 | 0,1644 | 8,92 | -4,09 |
| 9,51 | -4,78 | 1, 9 | 0,1473 | 9,21 | -4,19 |
| 8,64 | -3,09 | 1,96 | 0,1762 | 8,65 | -3,07 |
| 7,83 | -1,31 | 3,64 | 0,1112 | 7,56 | -0,64 |
| 6,39 | 2,03 | 2,62 | 0,119 | 6,63 | 1,74 |
| 5,87 | 4,6 | 0,96 | 0,1235 | 6,03 | 4,24 |
| 6,1 | 5,53 | 0,39 | 0,1768 | 6 | 5,35 |
| 5,74 | 5,4 | 0,6 | 0,2449 | 5,7 | 5,39 |
| 5,18 | 5,19 | | 0,2766 | 5,35 | 5,26 |
| c_min2 = 0,06366789194265116 | | | | c_min3 = 0,11115762237178445 | |
| c_max2 = 0,25508490012515816 | | | | c_max3 = 0,2766323734445183 | |
| c_min2/c_max2 = 0,24959490707373239 | | | | c_min3/c_max3 = 0,4018243453855134 | |

Fig. 4b zeigt ein weiteres Beispiel, die Tabelle 2 fasst die zu diesem Beispiel zugehörigen Koordinaten, Geschwindigkeiten, etc. analog zu obigem Beispiel zusammen. Die Kurve, die durch dunkle Kreise markiert ist, zeigt eine konstruierte Spur von tatsächlichen Positionen. Die geschätzten Positionen entsprechen einer Überlagerung von diesen tatsächlichen Positionen mit einem normalverteilten Rauschen. Diese Überlagerung ist durch die schwarze Kurve dargestellt, welche auch durch die quadratische Markierungen gekennzeichnet ist. Die graue Kurve, die ebenfalls mit Quadraten markiert ist, zeigt die geschätzten Positionen nach drei Iterationen, die Kurve, die zwischen der grauen und der äußeren schwarzen Kurve liegt, zeigt die Schätzpositionen nach der ersten Iteration. Der Mittelwert

$$f = \frac{1}{N} \sum \| \boldsymbol{r}_i - \boldsymbol{p}_i \| \qquad (29)$$

vom Betrag des Fehlers $r_i$-$p_i$ ist 12,87 (Fehler0 in Tab. 2). Die Koordinaten der geschätzten Positionen und die Werte der Koeffizienten $c_i$ finden sich für die ersten drei Iterationen in Tab. 2. Die tatsächlichen, nicht fehlerbehafteten Positionen sind in Fig. 4b erkennbar. Nach einer ersten Iteration beträgt der mittlere Fehler noch 8,7 (Fehler1 in der Tab. 2). Nach drei Iterationen ist der Fehler nur noch 7,57m, also 58,8% des ursprünglichen Fehlers.

Tabelle 2: Koordinaten und Gewichte im Fallbeispiel 2

| x0/10m | y0/10m | \|v\| /(10m/s) | c | x1/10m | y1/10m |
|---|---|---|---|---|---|
| 10,37 | 18,48 | 0,72 | 0,2352 | 10,37 | 18,48 |
| 9,67 | 18,67 | 2,22 | 0,1698 | 10,6 | 18,36 |
| 11,77 | 17,92 | 3,43 | 0,1326 | 12,22 | 18,45 |
| 15,06 | 18,89 | 1,43 | 0,1468 | 14,32 | 18,95 |
| 14,89 | 20,31 | 2,33 | 0,1937 | 15,21 | 19,68 |
| 16,38 | 18,52 | 1,65 | 0,2195 | 16,4 | 18,81 |
| 17,94 | 17,99 | 2,26 | 0,2024 | 16,9 | 18,41 |
| 15,88 | 18,91 | 3,09 | 0,1416 | 17,33 | 18,02 |
| 18,36 | 17,06 | 2,36 | 0,1562 | 18,01 | 17 |
| 19,3 | 14,89 | 0,91 | 0,1813 | 19,24 | 15,49 |
| 19,98 | 15,49 | 2,36 | 0,1966 | 20,26 | 14,98 |
| 21,82 | 14 | 2,99 | 0,1741 | 22,05 | 14,05 |
| 24,52 | 12,72 | 0,79 | 0,199 | 23,78 | 13,14 |
| 23,96 | 13,28 | 2,3 | 0,1943 | 24,67 | 13,03 |
| 26,23 | 12,86 | 2,56 | 0,2048 | 25,46 | 12,39 |
| 25,3 | 10,48 | 1,82 | 0,2026 | 25,94 | 11,21 |
| 27,01 | 11,1 | 0,93 | 0,2328 | 26,67 | 10,76 |
| 27,22 | 10,19 | 2,8 | 0,2284 | 27,84 | 10,89 |
| 29,59 | 11,68 | 3,05 | 0,1157 | 28,7 | 9,85 |
| 29,75 | 8,64 | | 0,1099 | 29,69 | 9,69 |
| Fehler0 = 12,869038927920777 | | | | Fehler1 = 8,695542028963332 | |
| | | | | c_min = 0,10985605433061177 | |
| | | | | c_max = 0,2352158045049347 | |
| | | | | c_min/c_max = 0,46704367745113423 | |
| | | | | | |
| x1/10m | y1/10m | \|v\| /(10m/s) | c | x2/10m | y2/10m |
| 10,37 | 18,48 | 0,26 | 0,2352 | 10,37 | 18,48 |
| 10,6 | 18,36 | 1,62 | 0,214 | 10,98 | 18,42 |
| 12,22 | 18,45 | 2,16 | 0,1919 | 12,35 | 18,56 |
| 14,32 | 18,95 | 1,15 | 0,2135 | 14,04 | 19 |

(fortgesetzt)

| x1/10m | y1/10m | \|v\| /(10m/s) | c | x2/10m | y2/10m |
|---|---|---|---|---|---|
| 15,21 | 19,68 | 1,47 | 0,2189 | 15,28 | 19,29 |
| 16,4 | 18,81 | 0,65 | 0,2259 | 16,23 | 18,93 |
| 16,9 | 18,41 | 0,57 | 0,2352 | 16,88 | 18,41 |
| 17,33 | 18,02 | 1,22 | 0,2352 | 17,39 | 17,86 |
| 18,01 | 17 | 1,95 | 0,2352 | 18,15 | 16,88 |
| 19.24 | 15,49 | 1,14 | 0,2 | 19,18 | 15,78 |
| 20,26 | 14,98 | 2,01 | 0,1866 | 20,46 | 14,87 |
| 22,05 | 14,05 | 1,96 | 0,1866 | 22,03 | 14,06 |
| 23,78 | 13,14 | 0,9 | 0,2449 | 23,6 | 13,31 |
| 24,67 | 13,03 | 1,02 | 0,2169 | 24,64 | 12,89 |
| 25,46 | 12,39 | 1,27 | 0,2169 | 25,38 | 12,26 |
| 25,94 | 11,21 | 0,86 | 0,2289 | 26 | 11,38 |
| 26,67 | 10,76 | 1,18 | 0,2213 | 26,78 | 10,9 |
| 27,84 | 10,89 | 1,34 | 0,2521 | 27,77 | 10,61 |
| 28,7 | 9,85 | 1 | 0,2 | 28,74 | 10,11 |
| 29,69 | 9,69 | | 0,2 | 29,36 | 9,74 |
| Fehler1 = 8,695542028963332 | | | | Fehler2= 7,959293287270081 | |
| c_min = 0,10985605433061177 | | | | c_min = 0,18660659830736148 | |
| c_max = 0,2352158045049347 | | | | c_max = 0,25214686466427244 | |
| c_min/c_max = 0,46704367745113423 | | | | c_min/c_max = 0,7400710635677494 | |
| | | | | | |
| x2/10m\| | y2/10m | v\| /(10m/s) | c | x3/10m | y3/10m |
| 10,37 | 18,48 | 0,62 | 0,2352 | 10,37 | 18,48 |
| 10,98 | 18,42 | 1,37 | 0,214 | 11,18 | 18,47 |
| 12,35 | 18,56 | 1,75 | 0,2119 | 12,43 | 18,63 |
| 14,04 | 19 | 1,27 | 0,2328 | 13,94 | 18,97 |
| 15,28 | 19,29 | 1,02 | 0,2289 | 15,21 | 19,13 |
| 16,23 | 18,93 | 0,83 | 0,2259 | 16,16 | 18,89 |
| 16,88 | 18,41 | 0,75 | 0,2449 | 16,85 | 18,4 |
| 17,39 | 17,86 | 1,25 | 0,2352 | 17,46 | 17,75 |
| 18,15 | 16,88 | 1,5 | 0,2352 | 18,22 | 16,85 |
| 19,18 | 15,78 | 1,57 | 0,2 | 19,25 | 15,83 |
| 20,46 | 14,87 | 1,77 | 0,2 | 20,53 | 14,89 |
| 22,03 | 14,06 | 1,74 | 0,2 | 22,03 | 14,07 |

(fortgesetzt)

| x2/10m\| | y2/10m | v\| /(10m/s) | c | x3/10m | y3/10m |
|---|---|---|---|---|---|
| 23,6 | 13,31 | 1,12 | 0,2169 | 23,48 | 13,38 |
| 24,64 | 12,89 | 0,97 | 0,2352 | 24,57 | 12,84 |
| 25,38 | 12,26 | 1,07 | 0,2449 | 25,35 | 12,2 |
| 26 | 11,38 | 0,92 | 0,2289 | 26,04 | 11,48 |
| 26,78 | 10,9 | 1,03 | 0,2577 | 26,83 | 10,94 |
| 27,77 | 10,61 | 1,09 | 0,2672 | 27,76 | 10,56 |
| 28,74 | 10,11 | 0,72 | 0,2449 | 28,65 | 10,14 |
| 29,36 | 9,74 | | 0,3 | 29,18 | 9,85 |
| Fehler2= 7,959293287270081 | | | | Fehler3 = 7,56973514406132 | |
| c_min = 0,18660659830736148 | | | | c_min = 0,2 | |
| c_max = 0,25214686466427244 | | | | c_max = 0,3 | |
| c_min/c_max = 0,7400710635677494 | | | | c_min/c_max = 0,6666666666666667 | |

Ein weiters sehr einfaches Beispiel für die Entwicklung der geschätzten Positionen $\boldsymbol{r}_i$, der Gewichtungskoeffizienten $c_i$ und der geschätzten Geschwindigkeiten $\boldsymbol{v}_i$, zeigen Fig. 5a, Fig. 5b und Fig. 5c. In Fig. 5a ist eine Ebene mit den Koordinaten x und y zu sehen, in der eine gleichmäßige, geradlinige Spur von geschätzten Positionen zu sehen ist, die durch einen einzelnen Ausreißer im Punkt $\boldsymbol{r}_4(40m,90m)^T$ gestört wird. In der Fig. 5a zeigen die mit schwarzen Kreisen markierten Orte die Ausgangssituation, die mit diamandförmigen Markierungen versehene Kurve die Schätzpositionen nach der ersten Iteration und die graue Kurve mit den quadratischen Markierungen die Schätzpositionen nach drei Iterationen.

Es wird angenommen, dass die maximale a-priori-Geschwindigkeit $v_{max}$=30m/s ist. Mit dieser Randbedingung wird $\boldsymbol{r}_4$ nach wenigen Iterationen so korrigiert, dass der Betrag der geschätzten Geschwindigkeit schnell in Richtung der maximal erlaubten Geschwindigkeit konvergiert. In analoger Darstellungsweise zeigt die Fig. 5b die Entwicklung der Gewichtungskoeffizienten und die Fig. 5c die geschätzten Geschwindigkeiten jeweils in der Ausgangssituation (schwarze kreisförmige Markierungen), nach der ersten Iteration (schwarze diamandförmige Markierungen) und nach drei Iterationen (graue quadratische Markierungen).

Ausführungsbeispiele der vorliegenden Erfindung bieten somit den Vorteil, dass durch Berücksichtigung statistischer Vorkenntnisse die Positionsbestimmung von Mobilfunkendgeräten mit erhöhter Genauigkeit erfolgen kann. Durch die Interpolation bzw. Extrapolation können Positionen eines Mobilfunkendgerätes sowohl in der Vergangenheit als auch aktuell genauer bestimmt werden. Dies ist insbesondere in Notfällen von besonderem Vorteil, da hier die Rettungskräfte schneller an den Ort des Geschehens gebracht werden können, womit wertvolle Zeit gewonnen werden kann und die Erfolgschance der Rettungskräfte erhöht wird.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

Bezugszeichenliste

100 Vorrichtung zum Schätzen

110 Einrichtung zum Liefern

120 Einrichtung zum Bestimmen

130 Einrichtung zum Zuweisen

140 Einrichtung zum Berechnen

210 Basisstations-Sende-Empfänger BTS 1

220 Basisstations-Sende-Empfänger BTS 2

230 Basisstations-Sende-Empfänger BTS 3

240 Basisstations-Sende-Empfänger BTS 4

250 Hindernis 1

260 Hindernis 2

610 Mobilstation

620 Mobilfunknetzwerk

630 Drahtverbundenes Netzwerk

640 Rettungsleitstelle

650 PLM Netzwerkoperator

660 IT-Zentrum

670 Modem

710 Mobilstation

720 Basisstations-Sende-Empfänger BTS 1

730 Basisstations-Sende-Empfänger BTS 2

740 Basisstations-Sende-Empfänger BTS 3

750 Hindernis 1

760 Hindernis 2

## Patentansprüche

**1.** Vorrichtung (100) zum Schätzen einer Aufenthaltsposition eines Mobilfunkendgerätes mit folgenden Merkmalen:

einer Einrichtung (110) zum Liefern von wenigstens zwei Schätzpositionen zu wenigstens zwei verschiedenen Zeitpunkten;
einer Einrichtung (120) zum Bestimmen von Geschwindigkeiten zwischen Schätzpositionen unter Berücksichtigung einer Geschwindigkeitsverteilung; und
einer Einrichtung (140) zum Berechnen der Aufenthaltsposition unter Verwendung der wenigstens zwei Schätzpositionen, wenigstens einer Geschwindigkeit und den wenigstens zwei verschiedenen Zeitpunkten.

**2.** Vorrichtung (100) gemäß Anspruch 1, bei der die Einrichtung (110) zum Liefern ausgebildet ist, um wenigstens drei Schätzpositionen zu drei verschiedenen Zeitpunkten zu Liefern, die Einrichtung (120) zum Bestimmen ausgebildet ist, um eine erste Geschwindigkeit zwischen einem ersten Paar von Schätzpositionen und um eine zweite Geschwindigkeit zwischen einem zweiten Paar von Schätzpositionen zu bestimmen, wobei sich das erste Paar von dem zweiten Paar unterscheidet und sich die erste Geschwindigkeit von der zweiten Geschwindigkeit unterscheidet, und wobei die Vorrichtung (100) ferner eine Einrichtung (130) zum Zuweisen von Gewichtungsfaktoren zu den Schätzpositionen aufweist, wobei ein Gewichtungsfaktor einer Schätzposition von einer Geschwindigkeit zwischen der Schätzposition und einer zeitlich benachbarten Schätzposition und von einer zu erwartenden Geschwindigkeitsverteilung des Mobilfunkendgerätes abhängt und die Einrichtung (140) zum Berechnen ferner angepasst ist, um unter Verwendung der wenigstens drei Schätzpositionen, der ersten und der zweiten Geschwindigkeit, der Gewichtungsfaktoren und den wenigsten drei Zeitpunkten die Aufenthaltsposition zu berechnen.

**3.** Vorrichtung (100) gemäß einem der Ansprüche 1 oder 2, bei der die Einrichtung (110) zum Liefern ausgebildet ist, um die Schätzpositionen basierend auf in dem Mobilfunkendgerät empfangenen Funksignalen von Basisstations-Sende-Empfängern zu liefern.

**4.** Vorrichtung (100) gemäß einem der Anspruch 3, bei dem die Einrichtung (110) zum Liefern ausgebildet ist, um die Schätzpositionen basierend auf Empfangspegelmessungen der Basisstations-Sende-Empfänger, der Basisstations-Sende-Empfängerpositionen und/oder der Abstrahlcharakteristika der Basisstations-Sende-Empfänger zu liefern.

**5.** Vorrichtung (100) gemäß Anspruch 4, bei der die Einrichtung (110) zum Liefern ausgebildet ist, um die Schätzpositionen basierend auf virtuellen Schwerpunkten von Mobilfunkzellen eines Basisstations-Sende-Empfängers, dessen Funksignale an dem Mobilfunkendgerät empfangbar sind, zu liefern.

**6.** Vorrichtung (100) gemäß einem der Ansprüche 1 bis 5, bei der die Einrichtung (110) zum Liefern ausgebildet ist, um die Schätzpositionen über einen GPS-Empfänger zu ermitteln.

**7.** Vorrichtung (100) gemäß einem der Ansprüche 1 bis 6, bei der die Einrichtung (110) zum Liefern ausgebildet ist, um die Schätzpositionen zu äquidistanten Zeitpunkten zu liefern.

**8.** Vorrichtung (100) gemäß einem der Ansprüche 1 bis 7, bei der die Einrichtung (120) zum Bestimmen ausgebildet ist, um aus Abständen zwischen den Schätzpositionen und Zeitspannen zwischen den Zeitpunkten die Geschwindigkeiten zu bestimmen.

**9.** Vorrichtung (100) gemäß Anspruch 8, bei der die Einrichtung (120) zum Bestimmen ausgebildet ist, um ferner Vorwissen über die Verteilung von Geschwindigkeiten und Schätzfehlern bei der Bestimmung der Geschwindigkeiten zu berücksichtigen.

**10.** Vorrichtung (100) gemäß Anspruch 9, bei die Einrichtung (120) zum Bestimmen ausgebildet ist, um aus den Paaren von Schätzpositionen Geschwindigkeiten mit höchsten a-posteriori-Auftrittswahrscheinlichkeiten für die Paare von Schätzpositionen, Fehlerwahrscheinlichkeiten oder a-priori-Geschwindigkeitsverteilungen zu bestimmen.

**11.** Vorrichtung (100) gemäß einem der Ansprüche 1 bis 10, bei der die Einrichtung (120) zum Bestimmen ausgebildet ist, um bei der Bestimmung der Geschwindigkeiten eine maximale Geschwindigkeit zu berücksichtigen.

**12.** Vorrichtung (100) gemäß einem der Ansprüche 1 bis 11, bei der die Einrichtung (120) zum Bestimmen ausgebildet ist, um bei der Bestimmung der Geschwindigkeiten eine Gauß-verteilte, eine exponentialverteilte, eine Rayleighverteilte oder eine gleichverteilte Geschwindigkeitsverteilung zu berücksichtigen.

**13.** Vorrichtung (100) gemäß einem der Ansprüche 1 bis 12, bei der die Einrichtung (130) zum Zuweisen ausgebildet ist, um einer Schätzposition aus der sich eine Geschwindigkeit mit einer hohen a-priori-Auftrittswahrscheinlichkeit ergibt einen größeren Gewichtungsfaktor zuzuweisen als einer Schätzposition aus der sich eine Geschwindigkeit mit einer niedrigen a-priori-Auftrittswahrscheinlichkeit ergibt.

**14.** Vorrichtung (100) gemäß einem der Ansprüche 1 bis 13, bei der die Einrichtung (130) zum Zuweisen ausgebildet

ist, um einer Schätzposition aus der sich eine Geschwindigkeit ergibt als Gewichtungsfaktor eine a-priori-Auftrittswahrscheinlichkeit der Geschwindigkeit zuzuweisen.

**15.** Vorrichtung (100) gemäß einem der Ansprüche 1 bis 14, bei der die Einrichtung (140) zum Berechnen ausgebildet ist, um die Aufenthaltsposition des Mobilfunkendgerätes durch Interpolation oder Extrapolation aus den Schätzpositionen, den Geschwindigkeiten, den Gewichtungsfaktoren und den Zeitpunkten zu berechnen.

**16.** Vorrichtung (100) gemäß einem der Ansprüche 1 bis 15, bei der die Einrichtung (140) zum Berechnen ausgebildet ist, um aus den Schätzpositionen und den Geschwindigkeiten neue Schätzpositionen für die Zeitpunkte zu bestimmen und aus den neuen Schätzpositionen und den Gewichtungsfaktoren die Aufenthaltsposition zu berechnen.

**17.** Vorrichtung (100) gemäß Anspruch 16, bei der die Einrichtung (140) zum Berechnen ausgebildet ist, um die Schätzpositionen und die neuen Schätzpositionen zu mitteln.

**18.** Vorrichtung (100) gemäß einem der Ansprüche 1 bis 17, die ausgebildet ist, um die Aufenthaltsposition iterativ zu bestimmen, wobei die Einrichtung (140) zum Berechnen ausgebildet ist, um die Aufenthaltsposition und neue Schätzpositionen zu berechnen, die Einrichtung (120) zum Bestimmen ausgebildet ist, um zu den neuen Schätzpositionen und der Aufenthaltsposition neue Geschwindigkeiten zu bestimmen und die Einrichtung (130) zum Zuweisen ausgebildet ist, um neue Gewichtungsfaktoren zu den neuen Schätzpositionen zuzuweisen.

**19.** Vorrichtung (100) gemäß einem der Ansprüche 1 bis 18, bei der die Einrichtung (140) zum Berechnen ausgebildet ist, um neue Schätzpositionen oder die Aufenthaltspositionen gemäß

$$\boldsymbol{r}_i(l+1)=\frac{\sum_{k=\min\{0,i-\mathrm{L}\}}^{\max\{i+\mathrm{L},\mathrm{N}-1\}} c_k\cdot\left[\boldsymbol{r}_k(l)+\arg\max_{v'}\left\{p_{\text{a-posteriori}}\left(v'\left|\frac{\left\|\boldsymbol{r}_i(l)-\boldsymbol{r}_k(l)\right\|}{\left|t_i-t_k\right|}\right.\right)\right\}\cdot\frac{\boldsymbol{r}_i(l)-\boldsymbol{r}_k(l)}{\left\|\boldsymbol{r}_i(l)-\boldsymbol{r}_k(l)\right\|}\cdot\left|t_i-t_k\right|\right]}{\sum_{k=\min\{0,i-\mathrm{L}\}}^{\max\{i+\mathrm{L},\mathrm{N}-1\}} c_k}$$

zu bestimmen, wobei $\mathbf{r}_i$ der Ortsvektor der neuen Schätzposition ist und die $t_i$ den Zeitpunkten der Schätzungen entsprechen, 1 der Iterationsindex und N die Anzahl der Schätzpositionen bzw. 1+max(i+L,N-1)-min(0,i-L) die Anzahl der berücksichtigten Schätzpositionen sind, $c_k$ den Gewichtungsfaktoren entspricht, $P_{a\text{-}posteriori}(v'|v)$ gleich der a-posteriori-Wahrscheinlichkeitsverteilung der Geschwindigkeit v' ist, unter der Bedingung, dass die Geschwindigkeit *v* anhand der Schätzwerte bestimmt wurde.

**20.** Vorrichtung (100) gemäß Anspruch 19, bei der die Einrichtung (130) ausgebildet ist, um die Gewichtungsfaktoren $c_i$ gemäß

$$c_i=\left[\prod_{\substack{k=\max(0,\,i-\mathrm{L})\\ k\neq i}}^{\min(\mathrm{N}-1,\,i+\mathrm{L})} p_{\text{a-priori, digital}}\left(\frac{\left\|\boldsymbol{r}_k-\boldsymbol{r}_i\right\|}{\left|t_k-t_i\right|}\right)\right]^{\frac{1}{\min(\mathrm{N}-1,\,i+\mathrm{L})-\max(0,\,i-\mathrm{L})}} \quad . \qquad (27),$$

zu bestimmen.

**21.** Vorrichtung (100) gemäß einem der Ansprüche 1 bis 20, bei der die Einrichtung (110) zum Liefern ausgebildet ist, um wenigstens eine erste Schätzposition zu einem ersten Zeitpunkt und eine zweite Schätzposition zu einem zweiten späteren Zeitpunkt zu liefern, bei der die Einrichtung (120) zum Bestimmen ausgebildet ist, um aus einer räumlichen Distanz der ersten und der zweiten Schätzpositionen und einer Zeitspanne zwischen dem ersten und dem zweiten Zeitpunkt eine Geschwindigkeit zu schätzen und diese auf eine Höchstgeschwindigkeit zu begrenzen, falls die

geschätzte Geschwindigkeit über der Höchstgeschwindigkeit liegt, und bei der die Einrichtung (140) zum Berechnen ausgebildet ist, um die Aufenthaltsposition durch Mitteln der zweiten Schätzposition und einer neuen Schätzposition, die sich aus der ersten Schätzposition, der geschätzten Geschwindigkeit und der Zeitspanne ergibt, zu berechnen.

**22.** Mobilfunkendgerät, das eine Vorrichtung (100) gemäß einem der Ansprüche 1 bis 21 umfasst.

**23.** Basisstation für einen Empfänger, der eine Vorrichtung (100) gemäß einem der Ansprüche 1 bis 21 umfasst.

**24.** Netzwerkelement eines Mobilfunknetzwerkes, das eine Vorrichtung (100) gemäß einem der Ansprüche 1 bis 21 umfasst.

**25.** Verfahren zum Schätzen einer Aufenthaltsposition eines Mobilfunkendgerätes, mit folgenden Schritten:

Liefern von wenigstens zwei Schätzpositionen zu zwei verschiedenen Zeitpunkten;
Bestimmen einer Geschwindigkeit zwischen den Schätzpositionen unter Berücksichtigung einer Geschwindigkeitsverteilung; und
Berechnen der Aufenthaltsposition unter Verwendung der wenigstens zwei Schätzpositionen, einer Geschwindigkeit und den verschiedenen Zeitpunkten.

**26.** Verfahren gemäß Anspruch 25, bei dem der Schritt des Lieferns der Schätzpositionen das Liefern wenigsten einer dritten Schätzposition zu einem dritten Zeitpunkt umfasst, der Schritt des Bestimmens der Geschewindigkeit ein Bestimmen einer ersten Geschwindigkeit zwischen einem ersten Paar von Schätzpositionen und einer zweiten Geschwindigkeit zwischen einem zweiten Paar von Schätzpositionen umfasst, wobei sich das erste Paar von dem zweiten Paar unterscheidet und sich die erste Geschwindigkeit von der zweiten Geschwindigkeit unterscheidet, und wobei das Verfahren ferner einen Schritt des Zuweisens von Gewichtungsfaktoren zu den Schätzpositionen aufweist, wobei ein Gewichtungsfaktor einer Schätzposition von einer Geschwindigkeit zwischen der Schätzposition und einer zeitlich benachbarten Schätzposition und von einer zu erwartenden Geschwindigkeitsverteilung des Mobilfunkendgerätes abhängt und der Schritt des Berechnens ferner unter Verwendung der wenigstens drei Schätzpositionen, der ersten und der zweiten Geschwindigkeit, der Gewichtungsfaktoren und den wenigsten drei Zeitpunkten die Aufenthaltsposition berechnet.

**27.** Verfahren gemäß einem der Ansprüche 25 oder 26, das ferner einen Schritt des Berechnens neuer Schätzpositionen aufweist und iterativ basierend auf den neuen Schätzpositionen eine neue Aufenthaltsposition bestimmt.

**28.** Computerprogramm zur Durchführung eines Verfahrens gemäß einem der Ansprüche 25 bis 27, wenn der Programmcode auf einem Computer abläuft.

FIG 1A

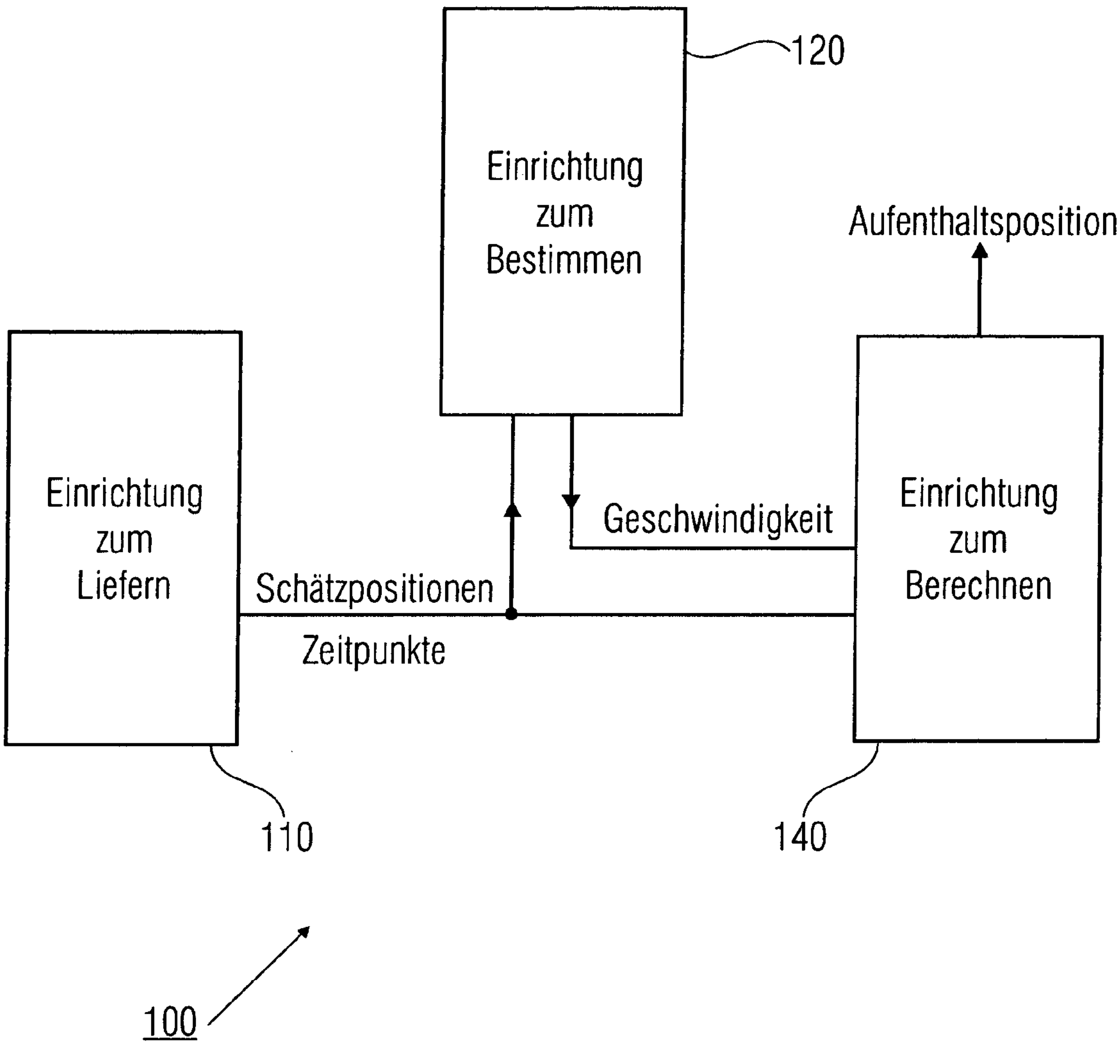
120
Einrichtung
zum
Bestimmen
Aufenthaltsposition
Einrichtung
zum
Liefern
Geschwindigkeit
Einrichtung
zum
Berechnen
Schätzpositionen
Zeitpunkte
110
140
100

FIG 1B

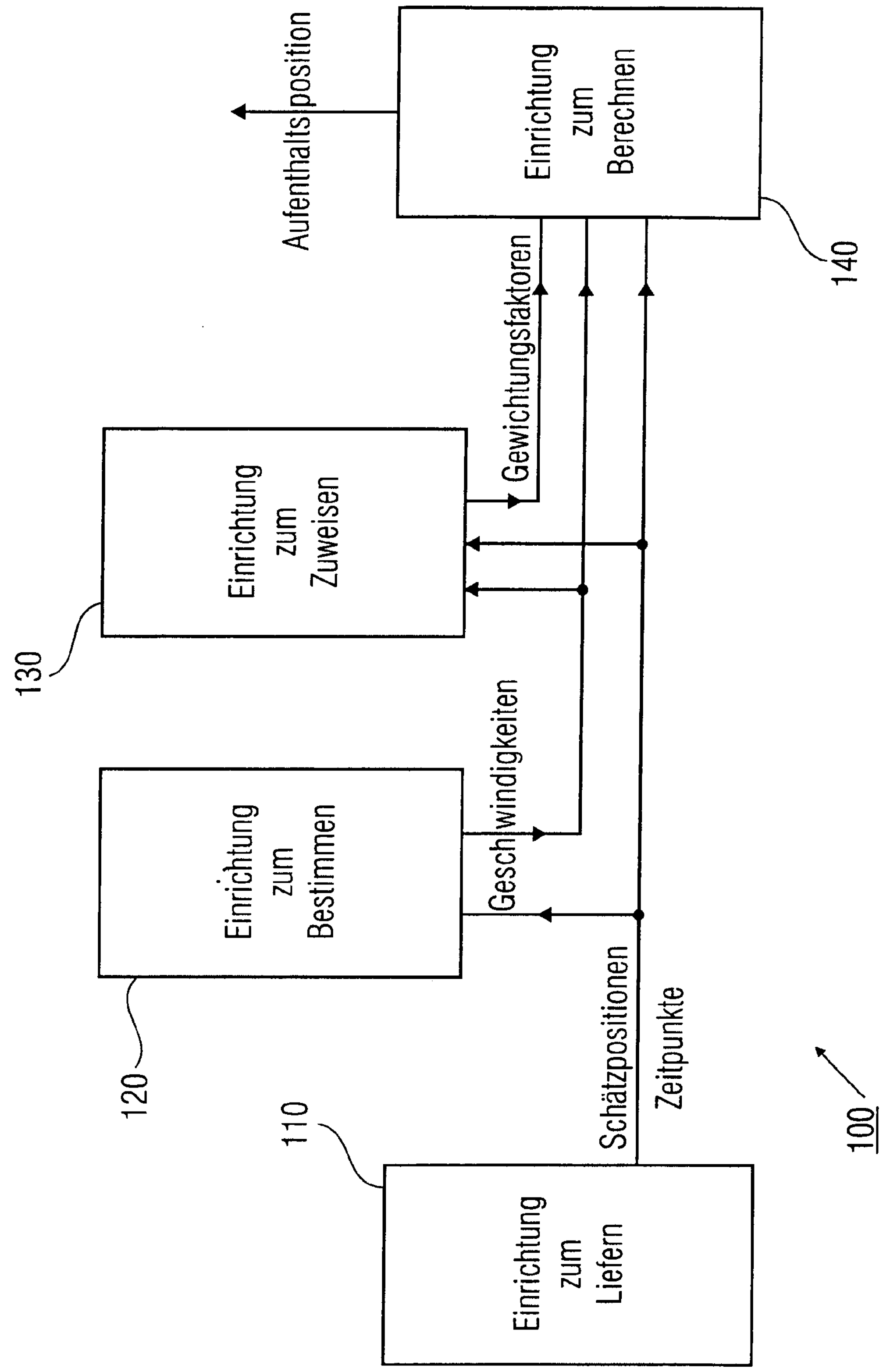
Einrichtung zum Liefern
Einrichtung zum Bestimmen
Einrichtung zum Zuweisen
Einrichtung zum Berechnen
Schätzpositionen
Zeitpunkte
Geschwindigkeiten
Gewichtungsfaktoren
Aufenthaltsposition
110
120
130
140
100

FIG 1C

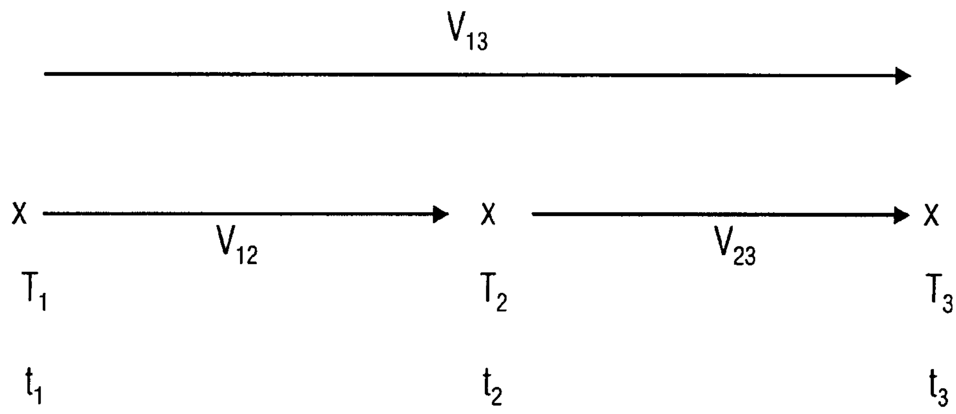

FIG 2

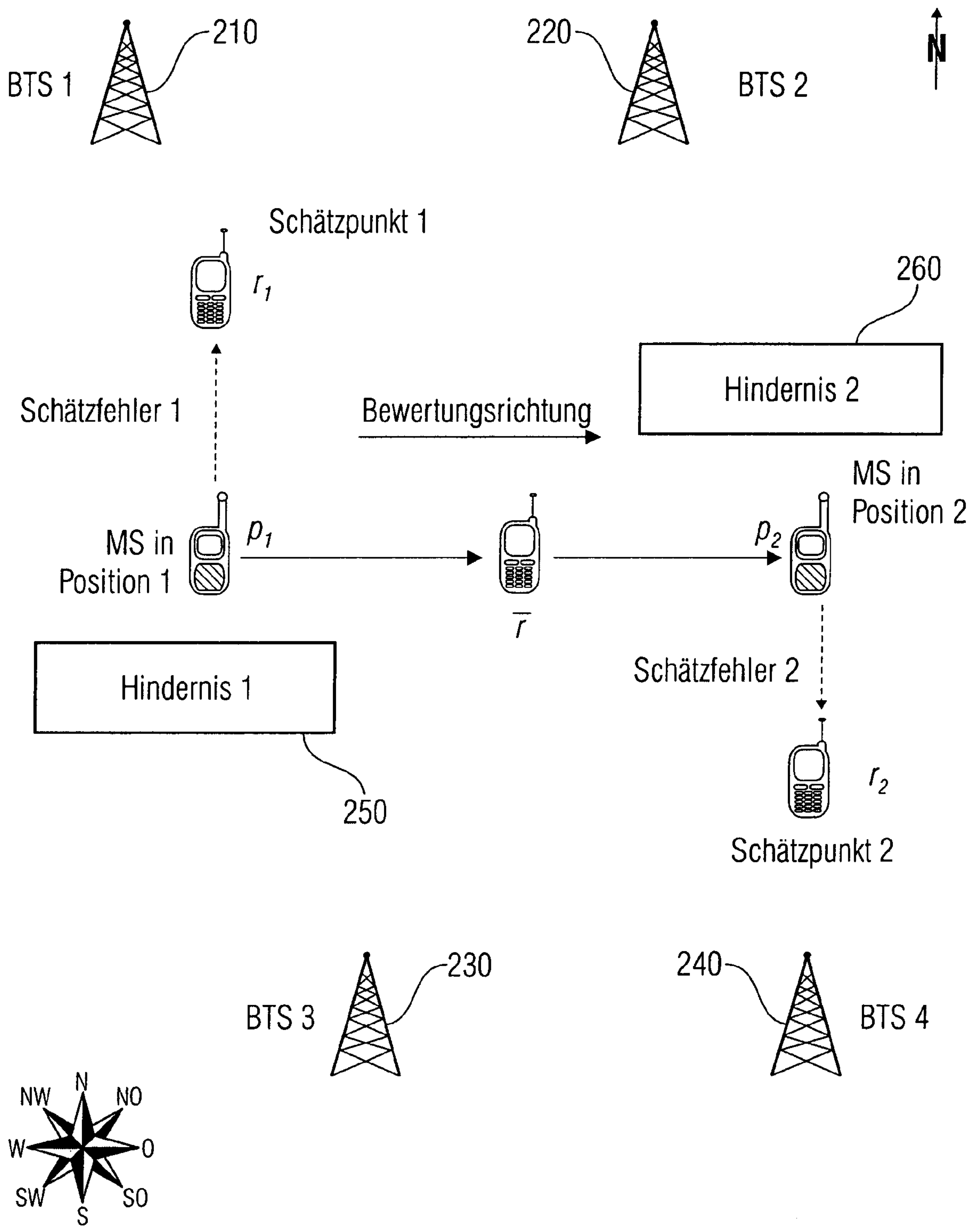
210
BTS 1
220
BTS 2
N
Schätzpunkt 1
$r_1$
260
Schätzfehler 1
Bewertungsrichtung
Hindernis 2
MS in Position 1
$p_1$
MS in Position 2
$p_2$
$\bar{r}$
Hindernis 1
Schätzfehler 2
$r_2$
250
Schätzpunkt 2
230
BTS 3
240
BTS 4
N
NW
NO
W
O
SW
SO
S

FIG 3A

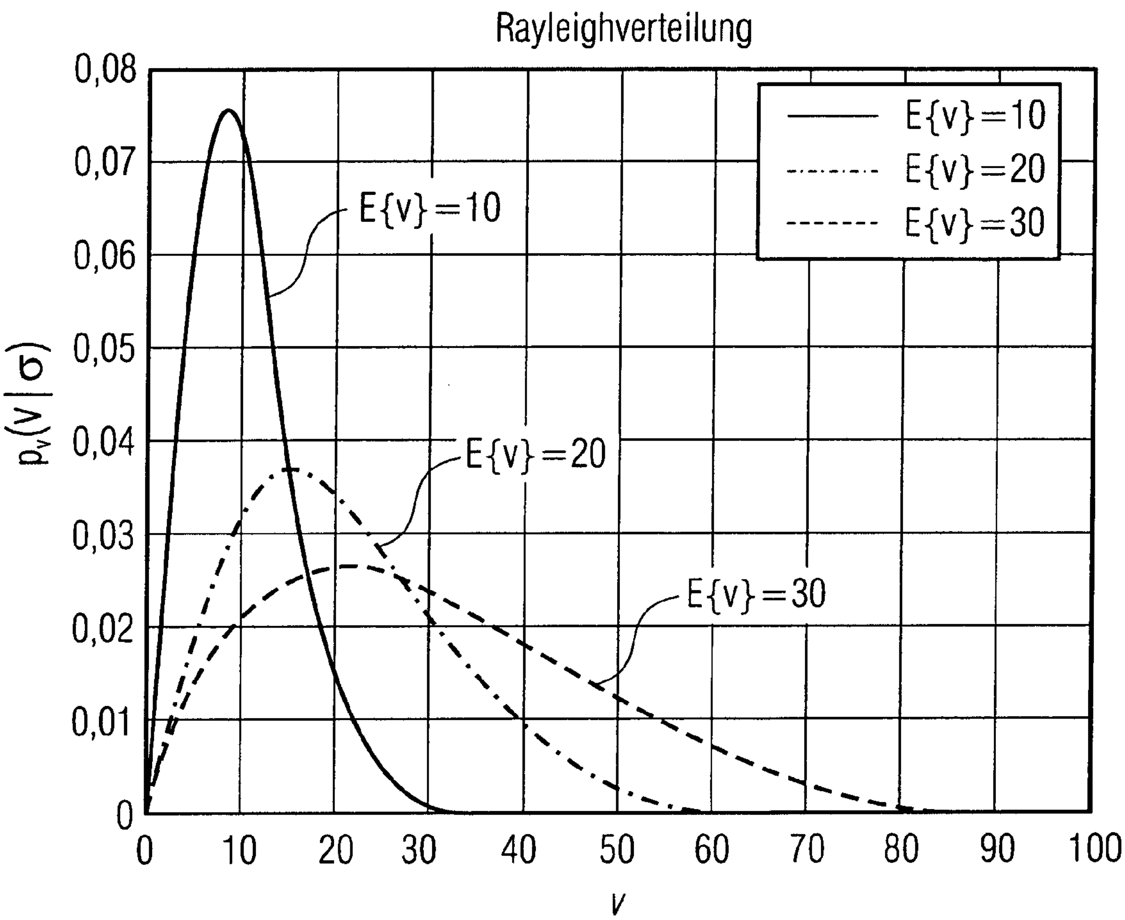
Rayleighverteilung
0,08
0,07
0,06
0,05
0,04
0,03
0,02
0,01
0
$p_v(v|\sigma)$
0
10
20
30
40
50
60
70
80
90
100
v
E{v}=10
E{v}=20
E{v}=30
E{v}=10
E{v}=20
E{v}=30

FIG 3B

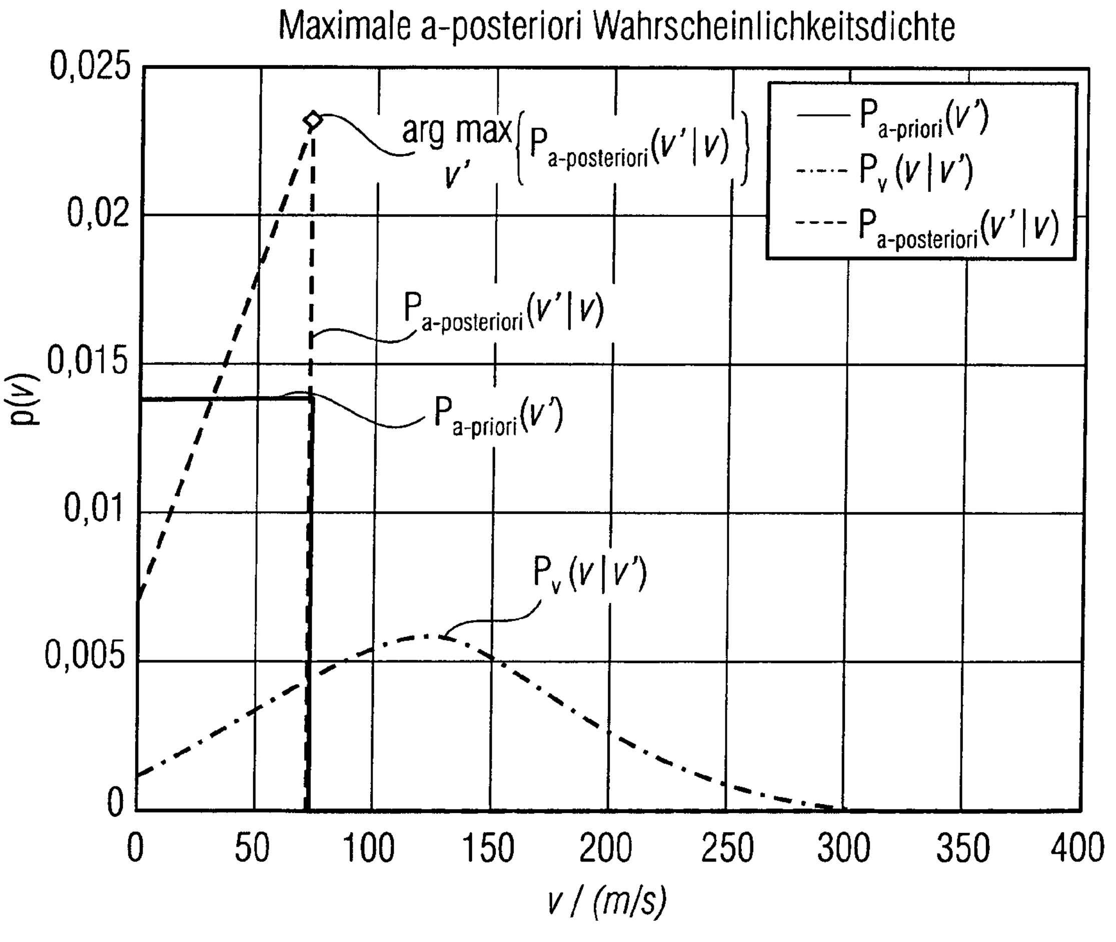
Maximale a-posteriori Wahrscheinlichkeitsdichte
0,025
0,02
0,015
0,01
0,005
0
p(v)
0
50
100
150
200
250
300
350
400
v / (m/s)
arg max
v'
{P a-posteriori(v'|v)}
P a-posteriori(v'|v)
P a-priori(v')
P v (v|v')
P a-priori(v')
P v (v|v')
P a-posteriori(v'|v)

FIG 3C

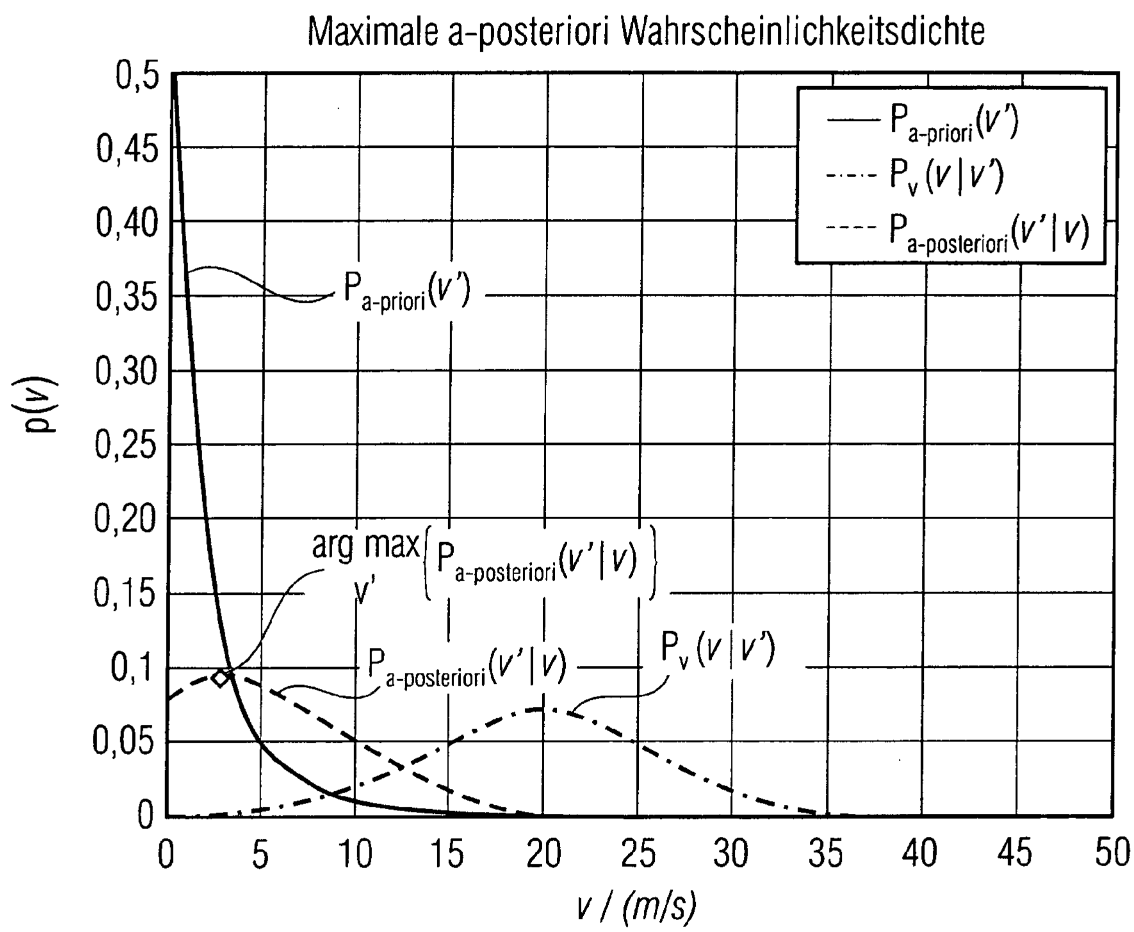
Maximale a-posteriori Wahrscheinlichkeitsdichte
0,5
0,45
0,40
0,35
0,30
0,25
0,20
0,15
0,1
0,05
0
p(v)
0 5 10 15 20 25 30 35 40 45 50
v / (m/s)
P a-priori(v')
P v (v|v')
P a-posteriori(v'|v)
arg max v' {P a-posteriori(v'|v)}

FIG 3D

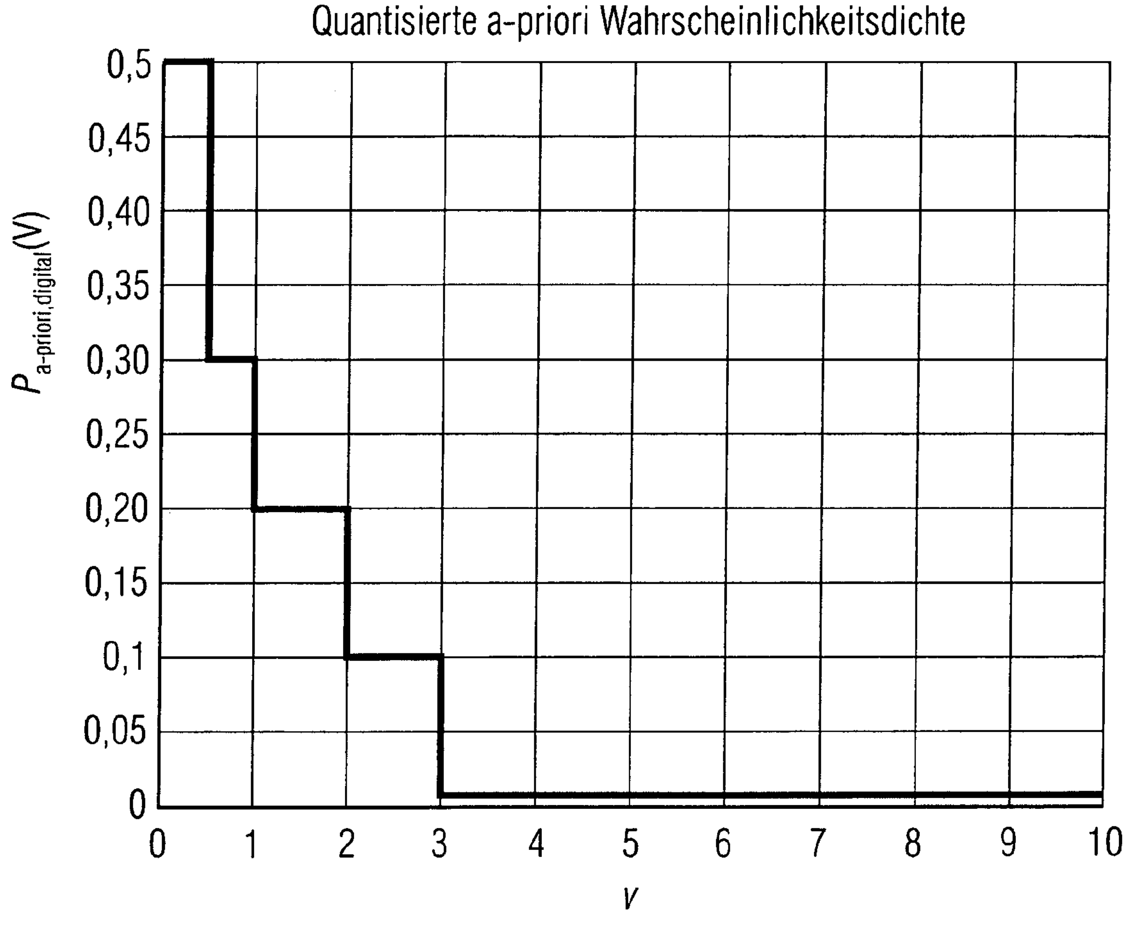
Quantisierte a-priori Wahrscheinlichkeitsdichte
0,5
0,45
0,40
0,35
0,30
0,25
0,20
0,15
0,1
0,05
0
$P_{a\text{-priori,digital}}(V)$
0
1
2
3
4
5
6
7
8
9
10
V

FIG 4A

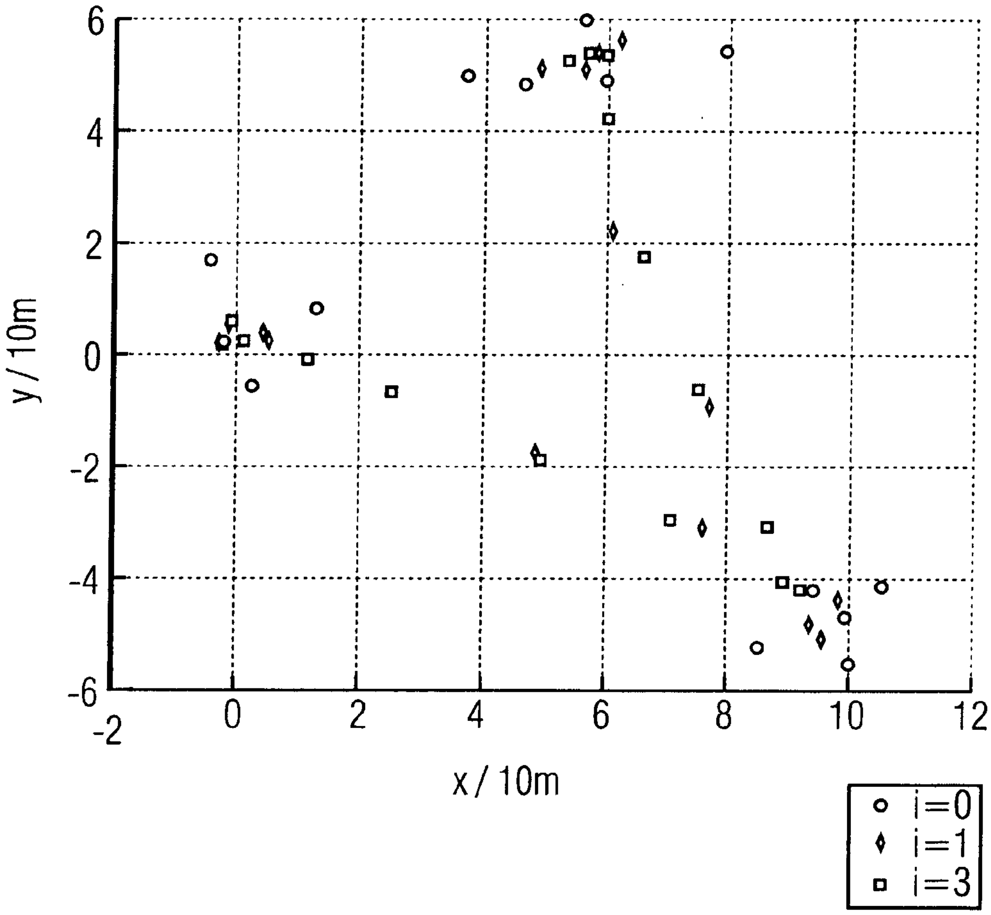

FIG 4B

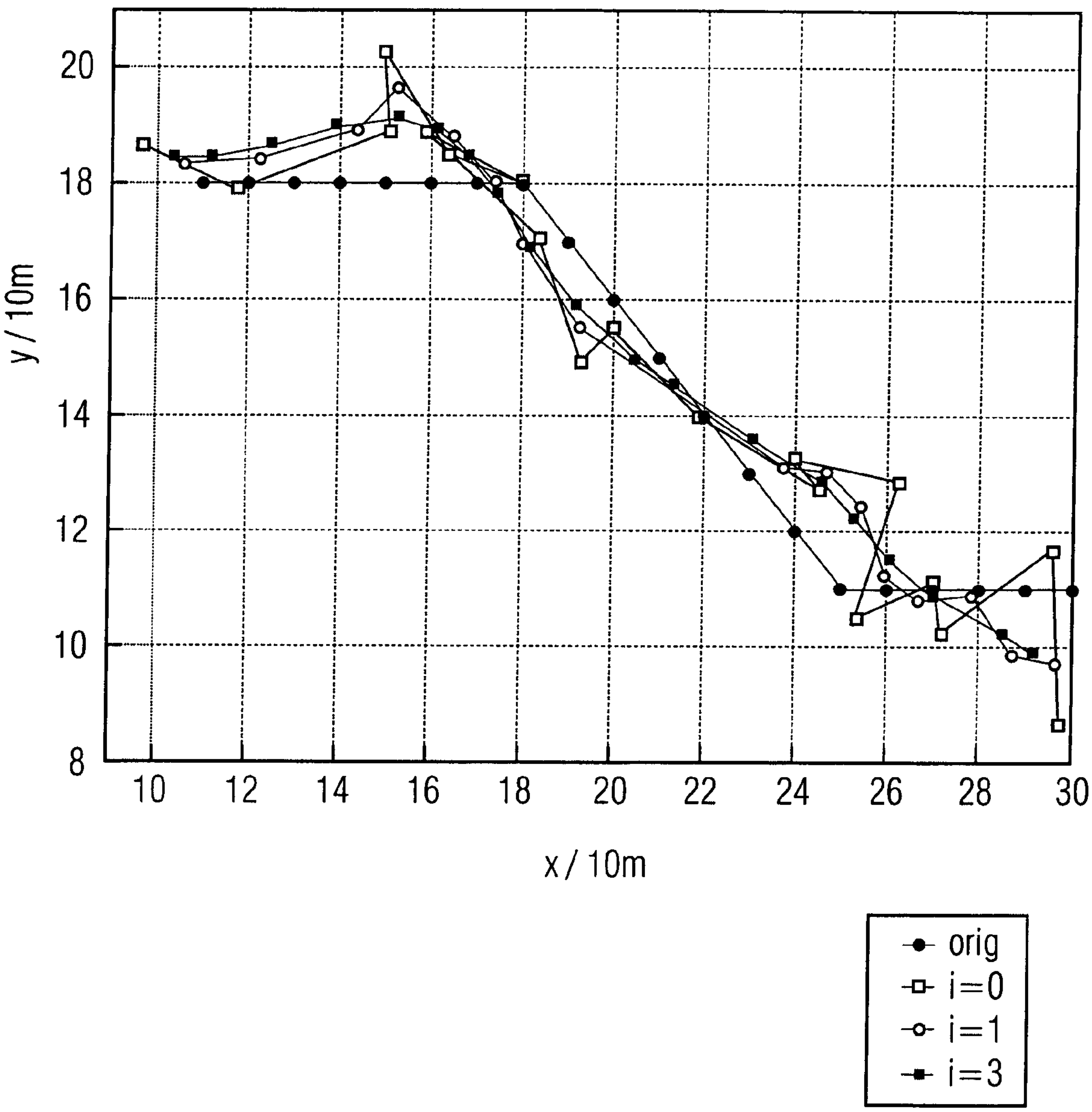
20
18
16
14
12
10
8
y / 10m
10
12
14
16
18
20
22
24
26
28
30
x / 10m
orig
i=0
i=1
i=3

FIG 5A

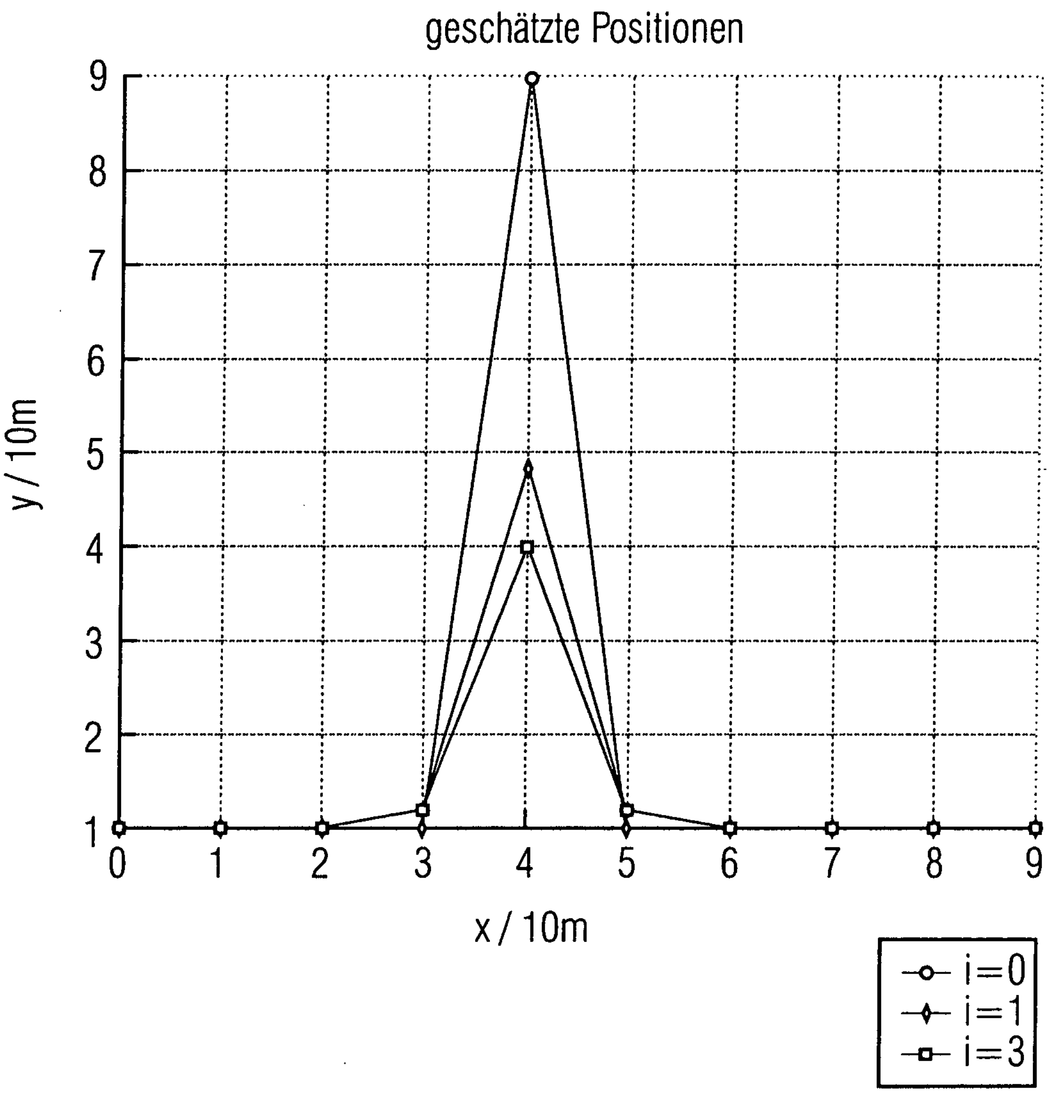
geschätzte Positionen
9
8
7
6
5
4
3
2
1
y / 10m
0
1
2
3
4
5
6
7
8
9
x / 10m
i=0
i=1
i=3

FIG 5B

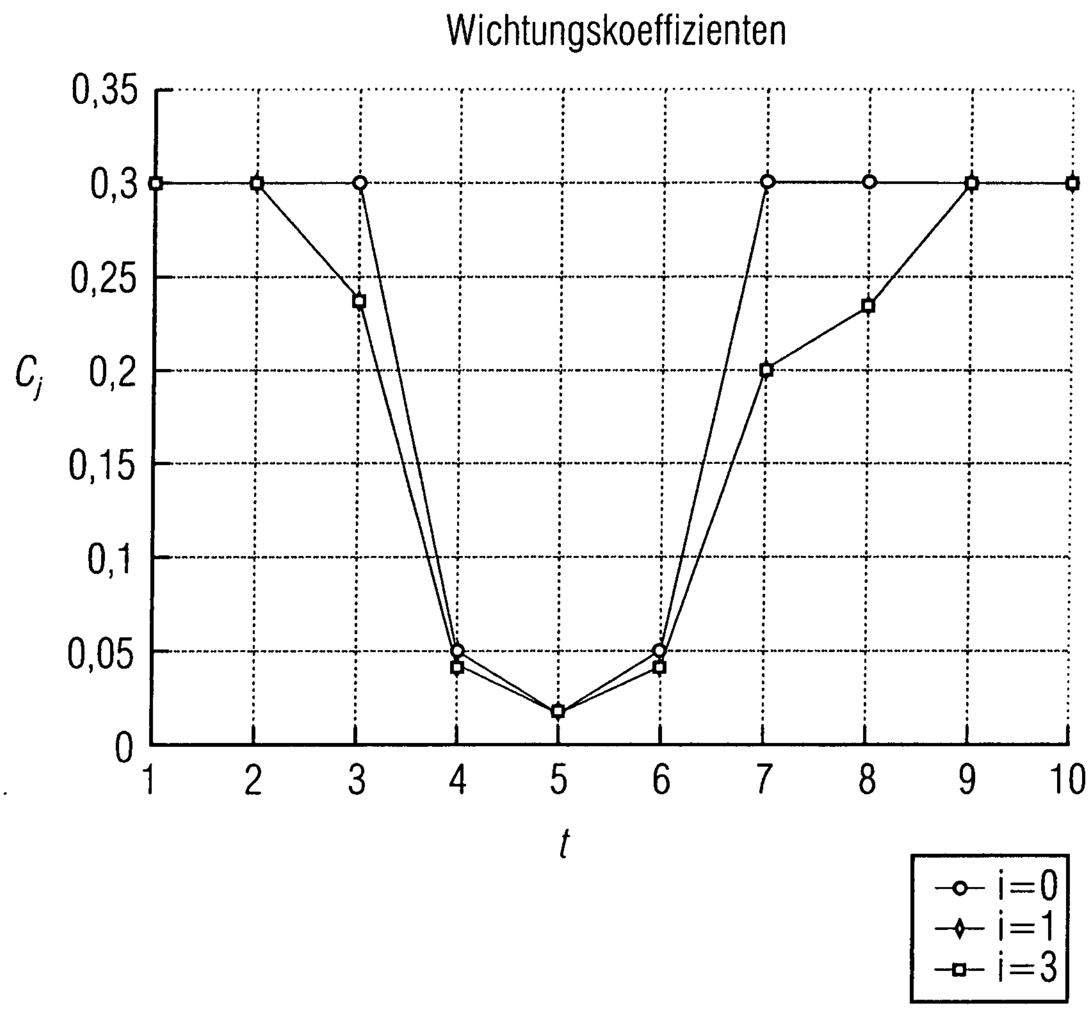
Wichtungskoeffizienten
0,35
0,3
0,25
$C_j$
0,2
0,15
0,1
0,05
0
1
2
3
4
5
6
7
8
9
10
t
i=0
i=1
i=3

FIG 5C

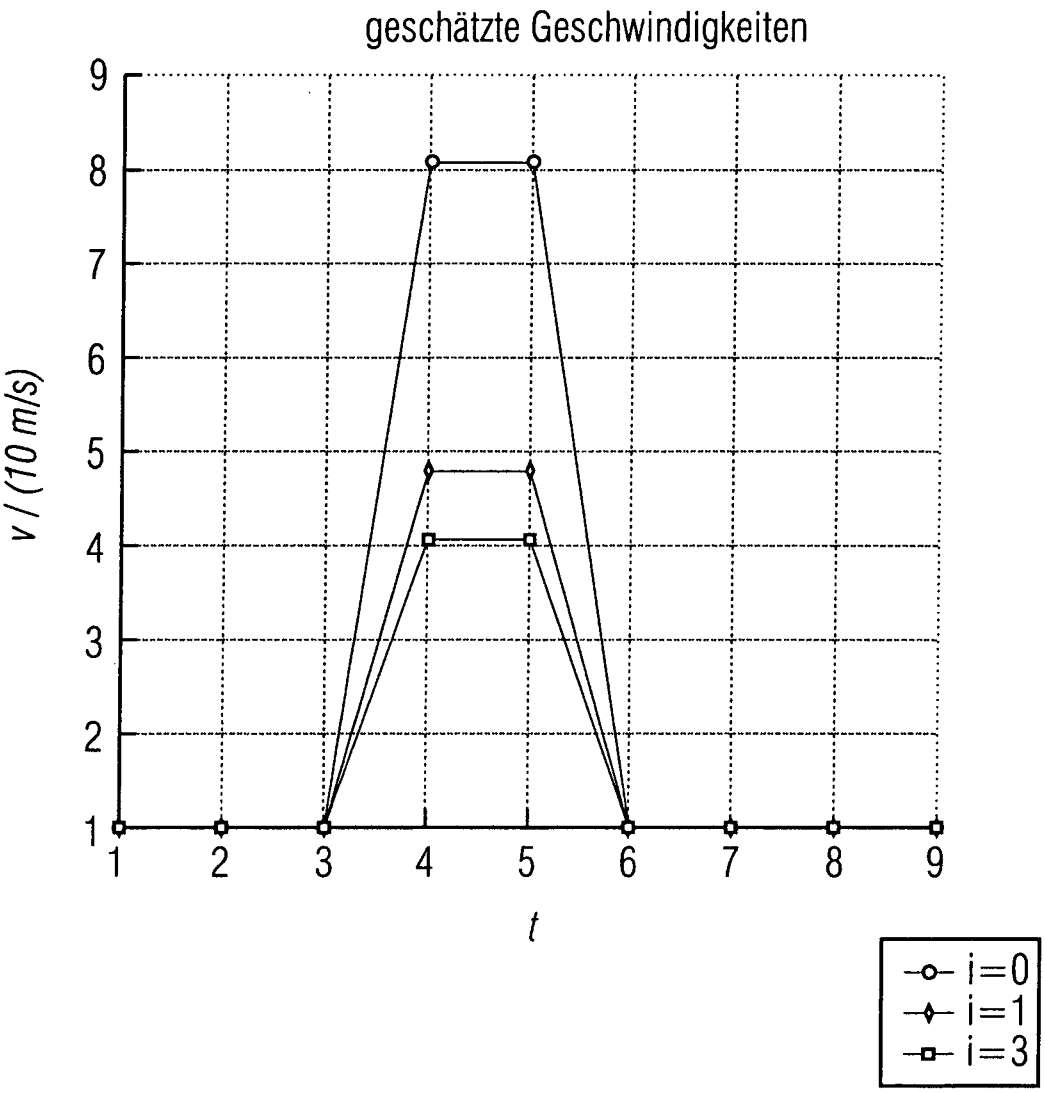
geschätzte Geschwindigkeiten
9
8
7
6
5
4
3
2
1
v / (10 m/s)
1
2
3
4
5
6
7
8
9
t
i=0
i=1
i=3

FIG 6
(STAND DER TECHNIK)

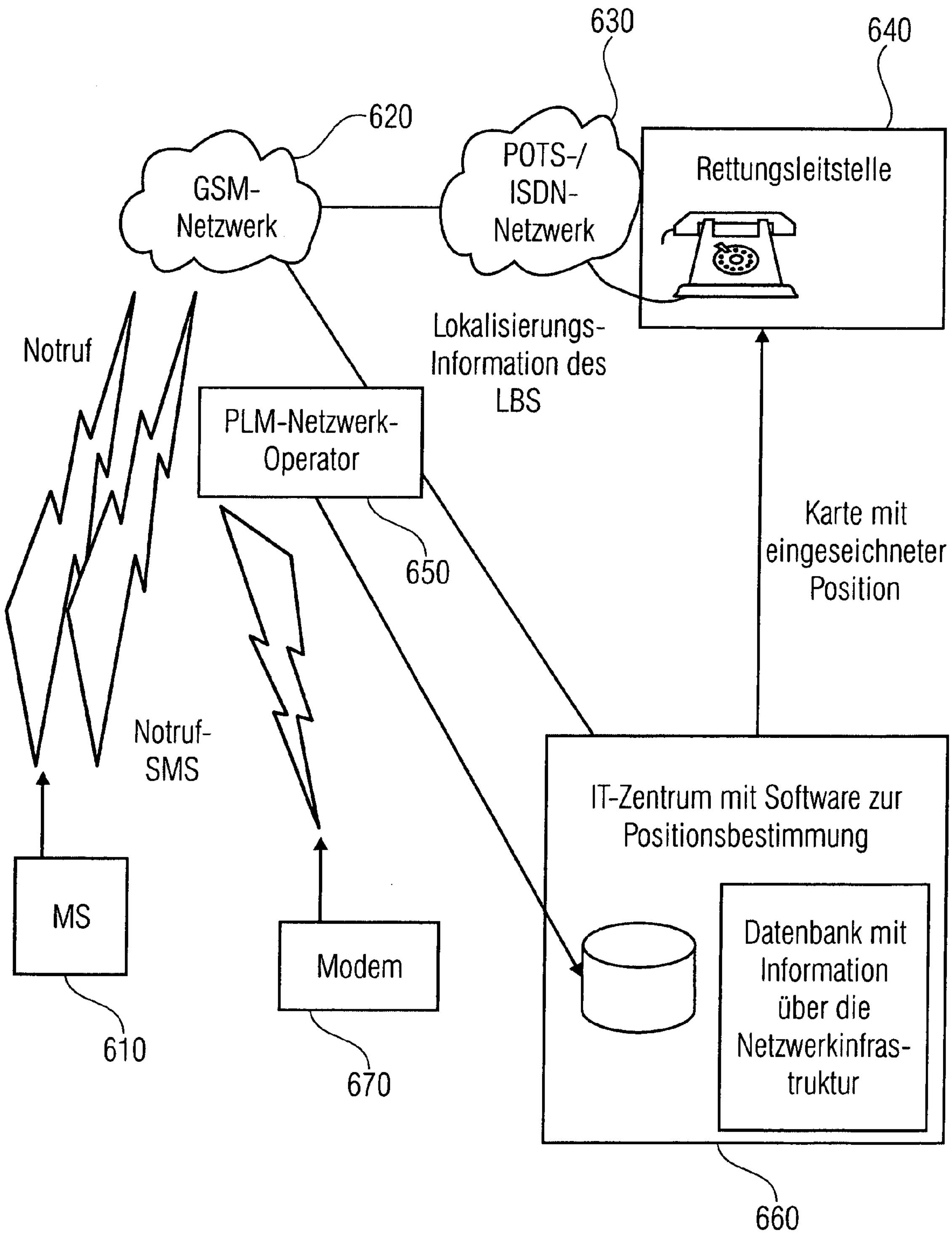

FIG 7
(STAND DER TECHNIK)